# EUROPEAN PATENT SPECIFICATION

(11) **EP 2 163 977 B1**
(45) Date of publication and mention of the grant of the patent: **08.07.2015**
(21) Application number: 09156644.8
(22) Date of filing: 30.03.2009
(51) Int. Cl.: G06F 3/0488, G06F 3/0485, G06F 3/0484

(54) **Method of controlling a graphical user interface using a touch display, terminal and recordable medium thereof**
Verfahren zur Steuerung einer graphischen Oberfläche mit einer Berührungsanzeige, Endgerät und aufzeichnungsfähiges Medium dafür
Procédé de contrôle d'une interface graphique à l'aide d'un écran tactile, terminal et support enregistrable correspondants

(30) Priority: 03.09.2008 KR 20080086697
(43) Date of publication of application: 17.03.2010
(73) Proprietor: LG Electronics Inc., Seoul 150-721 (KR)
(72) Inventor: Park, Jae Pil, 153-801, SEOUL (KR)
(74) Representative: Cabinet Plasseraud

(56) References cited:
- WO-A2-2005/043330
- US-A- 5 724 492
- US-A1- 2005 068 312
- "iPod Features Guide", INTERNET CITATION, 2006, XP007902997, Retrieved from the Internet: URL:http://manuals.info.apple.com/en/iPod_ (Late_2006)_Features_Guide.pdf [retrieved on 2007-09-21]

## Description

The present invention relates to a mobile terminal and corresponding method for providing multiple scroll bar functions.

### Discussion of the Related Art

Terminals now provide many additional services beside the basic call service. For example, user's can now access the Internet, play games, watch videos, listen to music, capture images and videos, record audio files, etc. Mobile terminals also now provide broadcasting programs such that user can watch television shows, sporting programs, videos etc.

Generally, terminals can be classified into mobile terminals and stationary terminals according to a presence or non-presence of mobility. Further, mobile terminals can be classified into handheld terminals and vehicle mounted terminals.

The mobile terminal also includes a complex graphic user interface (GUI) that the user uses to access the different functions provided on the terminal. However, many of the operations provided with the GUI are limited, which inconveniences the user. US 5724492 discloses a menu system that displays menus in the form of objects having multiple panels.

### SUMMARY OF THE INVENTION

Accordingly, one object of the present invention is to address the above-noted and other problems.

Another object of the present invention is to provide a terminal and corresponding method for providing multiple functions to a scroll bar.

To achieve these objects and other advantages and in accordance with the purpose of the invention, as embodied and broadly described herein, the present invention provides in one aspect a mobile terminal according to claim 1.

In another aspect, the present invention provides a method of controlling a mobile terminal according to claim 10.

In an example useful for understanding the present invention there is provided a mobile terminal including a touchscreen, a scroll bar on the touchscreen and the mobile terminal is configured to perform a first function when the scroll bar is touched and moved on the touch screen, and a controller configured to change the first function performed by the scroll bar into a second function that is different than the first function when the scroll bar is touched in a predetermined manner on the touchscreen.

In another example useful for understanding the present invention there is provided a method of controlling a mobile terminal, and which includes performing a first function when a scroll bar displayed on a touch screen of the mobile terminal is touched and moved on the touch screen, and changing the first function performed by the scroll bar into a second function that is different than the first function when the scroll bar is touched in a predetermined manner on the touchscreen.

Further scope of applicability of the present invention will become apparent from the detailed description given hereinafter. However, it should be understood that the detailed description and specific examples, while indicating preferred embodiments of the invention, are given by illustration only, since various changes and modifications within scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram of a mobile terminal according to an embodiment of the present invention;
FIG. 2 is a front perspective diagram of a mobile terminal according to an embodiment of the present invention;
FIG. 3 is a rear perspective diagram of the mobile terminal shown in FIG. 2;
FIG. 4 is a block diagram of a wireless communication system in which a mobile terminal according to an embodiment of the present invention is operable;
FIG. 5 is a flowchart illustrating a method of controlling a mobile terminal according to an embodiment of the present invention;
FIG. 6 includes overviews of display screens illustrating the method of controlling a mobile terminal according to an embodiment of the present invention;
FIG. 7 includes diagrams of a scroll bar shown in FIG. 6 according to an embodiment of the present invention;
FIG. 8 includes diagrams illustrating an operation of a scroll bar according to an embodiment of the present invention;
FIG. 9 includes diagrams illustrating an operation of a scroll bar according to another embodiment of the present invention;
FIG. 10 includes diagrams illustrating an operation of a scroll bar according to still another embodiment of the present invention;
FIG. 11 includes diagrams of a scroll bar shown in FIG. 10 according to an embodiment of the present invention;
FIG. 12 includes diagrams illustrating an operation of a scroll bar according to still another embodiment of the present invention;
FIG. 13 includes diagrams of a scroll bar shown in FIG. 12 according to an embodiment of the present invention;
FIG. 14 includes diagrams illustrating an operation of a scroll bar according to still another embodiment of the present invention;
FIG. 15 includes diagrams of a scroll bar shown in FIG. 14 according to an embodiment of the present invention;
FIG. 16 includes diagrams illustrating an operation of a scroll bar according to still another embodiment of the present invention;
FIGS. 17A and 17B includes diagrams of a scroll bar shown in FIG. 16 according to an embodiment of the present invention;
FIG. 18 includes diagrams illustrating an operation of a scroll bar according to another embodiment of the present invention;
FIG. 19 includes diagrams illustrating an operation of a scroll bar according to still another embodiment of the present invention;
FIG. 20 includes diagrams illustrating an operation of a scroll bar according to still another embodiment of the present invention;
FIG. 21 includes diagrams illustrating an operation of a scroll bar according to still another embodiment of the present invention;
FIG. 22 is a diagram of a scroll bar illustrating a method of controlling a mobile terminal according to still another embodiment of the present invention; and
FIG. 23 includes diagrams illustrating an operation of a scroll bar according to still another embodiment of the present invention.

### DETAILED DESCRIPTION OF THE INVENTION

Reference will now be made in detail to the preferred embodiments of the present invention, examples of which are illustrated in the accompanying drawings.

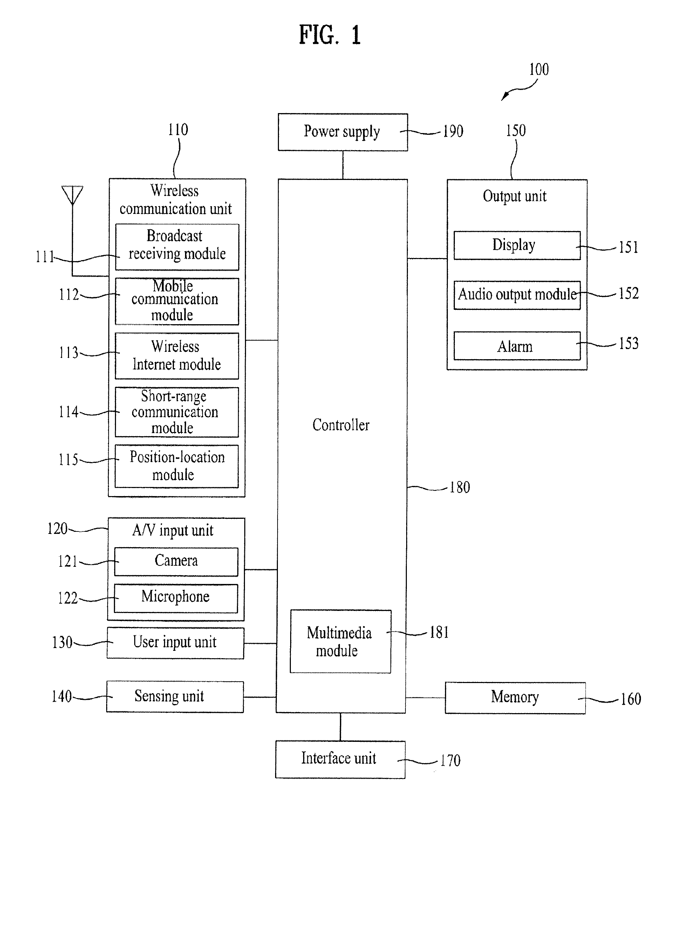

FIG. 1 is a block diagram of a mobile terminal 100 according to an embodiment of the present invention. As shown, the mobile terminal 100 includes a wireless communication unit 110 including one or more components which permit wireless communication between the mobile terminal 100 and a wireless communication system or network within which the mobile terminal is located.

For non-mobile terminals, the wireless communication unit 110 can be replaced with a wire wire communication unit can be commonly referred to as a communication unit. Also included is a broadcast receiving module 111 that receives a broadcast signal and/or broadcast associated information from an external broadcast managing entity via a broadcast channel. Multiple broadcast receiving modules 111 may also be provided.

The broadcast channel may include a satellite channel and a terrestrial channel. Further, the broadcast managing entity refers to a system which transmits a broadcast signal and/or broadcast associated information. Examples of broadcast associated information include information associated with a broadcast channel, a broadcast program, a broadcast service provider, etc. For example, the broadcast associated information may include an electronic program guide (EPG) of digital multimedia broadcasting (DMB) and an electronic service guide (ESG) of digital video broadcast-handheld (DVB-H).

In addition, the broadcast signal may be implemented, for example, as a TV broadcast signal, a radio broadcast signal, and a data broadcast signal. The broadcast signal may further include a broadcast signal combined with a TV or radio broadcast signal.

Also, the broadcast receiving module 111 is configured to receive broadcast signals transmitted from various types of broadcast systems. By a non-limiting example, such broadcasting systems include the digital multimedia broadcasting-terrestrial (DMB-T) system, the digital multimedia broadcasting-satellite (DMB-S) system, the digital video broadcast-handheld (DVB-H) system, the data broadcasting system known as the media forward link only (MediaFLO®) and the integrated services digital broadcast-terrestrial (ISDB-T) system. Receiving multicast signals is also possible. Further, data received by the broadcast receiving module 111 may be stored in a suitable device, such as a memory 160.

Also included is a mobile communication module 112 that communicates wireless signals with one or more network entities such as a base station or Node-B. Such signals may represent, for example, audio, video, multimedia, control signaling, and data.

Further, a wireless Internet module 113 supports Internet access for the mobile terminal 100. This module may be internally or externally coupled to the mobile terminal 100. Suitable technologies for wireless Internet may include, but are not limited to, WLAN (Wireless LAN)(Wi-Fi), Wibro (Wireless broadband), Wimax (World Interoperability for Microwave Access), and HSDPA (High Speed Downlink Packet Access). The wireless Internet module 113 can also be replaced with a wire Internet module in non-mobile terminals. The wireless Internet module 113 and wire Internet module may be commonly referred to as an Internet module.

Further, a short-range communication module 114 facilitates relatively short-range communications. Suitable technologies for short-range communication may include, but are not limited to, radio frequency identification (RFID), infrared data association (IrDA), ultra-wideband (UWB), as well as the networking technologies commonly referred to as Bluetooth and ZigBee.

A position-location module 115 is also included and identifies or otherwise obtains the location of the mobile terminal 100. This module may be implemented using, for example, global positioning system (GPS) components which cooperate with associated satellites, network components, and combinations thereof.

The GPS module 115 is also able to precisely calculate current 3-dimensional position information based on longitude, latitude and altitude by calculating distance information and precise time information from at least three satellites and then applying triangulation to the calculated information. Location and time information are calculated using three satellites, and errors of the calculated location position and time information are then amended using another satellite. Further, the GPS module 115 is able to calculate speed information by continuously calculating a real-time current location.

Also included in the terminal is an audio/video (A/V) input unit 120 that is configured to provide audio or video signals input to the mobile terminal 100. As shown, the A/V input unit 120 includes a camera 121 and a microphone 122. The camera 121 receives and processes image frames of still pictures or video.

In addition, the microphone 122 receives an external audio signal while the portable device is in a particular mode, such as phone call mode, recording mode or voice recognition mode. This audio signal is processed and converted into digital data.

The portable device, and specifically the A/V input unit 120, typically includes assorted noise removing algorithms to remove noise generated in the course of receiving the external audio signal. Data generated by the A/V input unit 120 may be stored in the memory 160, utilized by an output unit 150, or transmitted via one or more modules of the communication unit 110. If desired, two or more microphones and/or cameras may be used.

FIG. 1 also illustrates a user input unit 130 that generates input data responsive to user manipulation of an associated input device or devices. Examples of such devices include a keypad, a dome switch, a touchpad such as static pressure/capacitance, a jog wheel and a jog switch. A specific example is one in which the user input unit 130 is configured as a touchpad in cooperation with a display, which will be described in more detail below.

Further, a sensing unit 140 provides status measurements of various aspects of the mobile terminal 100. For example, the sensing unit may detect an open/close status of the mobile terminal 100, relative positioning of components such as a display and keypad of the mobile terminal, a change of position of the mobile terminal or a component of the mobile terminal, a presence or absence of user contact with the mobile terminal, orientation or acceleration/deceleration of the mobile terminal, etc.

For example, if the mobile terminal 100 is configured as a slide-type mobile terminal, the sensing unit 140 may sense whether a sliding portion of the mobile terminal is open or closed. Other examples include the sensing unit 140 sensing the presence or absence of power provided by a power supply 190, and the presence or absence of a coupling or other connection between an interface unit 170 and an external device.

In addition, the interface unit 170 is implemented to couple the mobile terminal 100 with external devices. Typical external devices include wired/wireless headphones, external chargers, power supplies, storage devices configured to store data such as audio, video, and pictures, as well as earphones and microphones. The interface unit 170 may also be configured using a wired/wireless data port, audio input/output ports, video input/output port, a card socket for coupling to a memory card, a subscriber identity module (SIM) card, a user identity module (UIM) card, or removable user identity module (RUIM) card).

When the mobile terminal 110 is connected to an external cradle, the interface unit 170 becomes a passage for supplying the mobile terminal 100 with power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

Further, the output unit 150 includes various components that support the output requirements of the mobile terminal 100 such as a display 151 that is generally implemented to visually display information associated with the mobile terminal 100. For example, if the mobile terminal 100 is operating in a phone call mode, the display 151 provides a user interface or graphical user interface that includes information associated with placing, conducting, and terminating a phone call. As another example, if the mobile terminal 100 is in a video call mode or a photographing mode, the display 151 may additionally or alternatively display images associated with these modes.

One particular implementation includes the display 151 configured as a touch screen working in cooperation with an input device, such as a touchpad. This configuration permits the display 151 to function both as an output device and an input device.

Further, the display 151 may be implemented using display technologies including a liquid crystal display (LCD), a thin film transistor-liquid crystal display (TFT-LCD), an organic light-emitting diode display (OLED), a flexible display and a three-dimensional display.

The display 151 can also have a transparent configuration to enable the user to see through the display 151. This type of display is referred to as a transparent display. As one representative example for the transparent display, a transparent LCD or the like may be used.

Also, the mobile terminal 100 may include one or more display 151. An example of a two-display embodiment is one in which one display 151 is configured as an internal display viewable when the terminal 100 is in an opened position and a second display 151 configured as an external display viewable in both the open and closed positions.

The touchscreen can also be configured to detect a touch input pressure as well as a touch input position and size. Meanwhile, a proximity sensor can be provided within or around the touchscreen. The proximity sensor detects an object approaching a prescribed detecting surface or a presence or non-presence of an object existing around itself using an electromagnetic power or infrared rays without mechanical contact. Hence, the proximity sensor is advantageous to a contact sensor in lifespan and utilization.

An example for an operational principle of the proximity sensor is explained as follows. First, if an object approaches a sensor detecting surface while an oscillation circuit oscillates a sine radio frequency, an oscillation amplitude of the oscillation circuit attenuates or stops. This change is converted to an electric signal to detect a presence or non-presence of the object. Thus, even if a material (except a metallic material) comes between the RF oscillation proximity sensor and the object, a proximity switch is able to detect the object without interference with the material.

When the proximity sensor is not provided, and if the touchscreen is electrostatic, the touchscreen can be configured to detect the proximity of a pointer through an electric field change attributed to the proximity of the pointer. Thus, when the pointer is placed in the vicinity of the touchscreen without being actually contacted with the touchscreen, the touchscreen can detect a position of the pointer and a distance between the pointer and the touchscreen.

In addition, an action for enabling the pointer approaching the touchscreen to be recognized as placed on the touchscreen is named 'proximity touch' and an action for enabling the pointer to actually come into contact with the touchscreen is named 'contact touch'. Also, a position at which the proximity touch is made to the touchscreen using the pointer corresponds to a position of the pointer vertically corresponding to the touchscreen when the pointer makes the proximity touch.

If the proximity sensor is used, the proximity sensor is able to sense a proximity touch and its pattern (e.g., proximity touch distance, proximity touch direction, proximity touch speed, proximity touch position, proximity touch moving state, etc.). In addition, the proximity sensor is also able to output information corresponding to the sensed proximity touch action and the proximity touch pattern to the touchscreen.

FIG. 1 further shows the output unit 150 having an audio output module 152 which supports the audio output requirements of the mobile terminal 100. The audio output module 152 is often implemented using one or more speakers, buzzers, other audio producing devices, and combinations thereof.

The audio output module 152 functions in various modes such as call-receiving mode, call-placing mode, recording mode, voice recognition mode and broadcast reception mode. During operation, the audio output module 152 outputs audio relating to a particular function or status, such as call received, message received, or errors.

The output unit 150 is further shown having an alarm 153, which is used to signal or otherwise identify the occurrence of a particular event associated with the mobile terminal 100. Typical events include a call received, message received and user input received.

An example of a signal provided by the output unit 150 is tactile sensations. For example, the alarm 153 may be configured to vibrate responsive to the mobile terminal 100 receiving a call or message. As another example, vibration is provided by the alarm 153 responsive to receiving user input at the mobile terminal 100, thereby providing a tactile feedback mechanism. Further, the various signals provided by the components of the output unit 150 may be separately performed or performed using any combination of such components.

The memory 160 is used to store various types of data to support the processing, control, and storage requirements of the mobile terminal 100. Examples of such data include program instructions for applications operating on the mobile terminal 100, contact data, phonebook data, messages, pictures, and video. Moreover, data for various patterns of vibration and/or sound outputted for a touch input to the touchscreen can be stored in the memory 160.

Map information can also be stored in the memory 160, and thus the user's convenience can be increased by providing the map information to the user if necessary. Moreover, a recent use history or a cumulative use frequency of each menu in the mobile terminal can be stored in the memory 160.

The memory 160 shown in FIG. 1 may be implemented using any type or combination of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

A controller 180 is also included and controls the overall operations of the mobile terminal 100. For example, the controller 180 performs the control and processing associated with voice calls, data communications, instant message communication, video calls, camera operations and recording operations.

The controller 180 also includes a multimedia module 181 that provides multimedia playback. The multimedia module 181 may be configured as part of the controller 180, or implemented as a separate component. Moreover, the controller 180 is able to perform a pattern recognizing process for recognizing a writing input and a picture drawing input performed on the touchscreen as characters or images, respectively.

Further, the power supply 190 provides power used by the various components for the mobile terminal 100. The power may be internal power, external power, or combinations thereof.

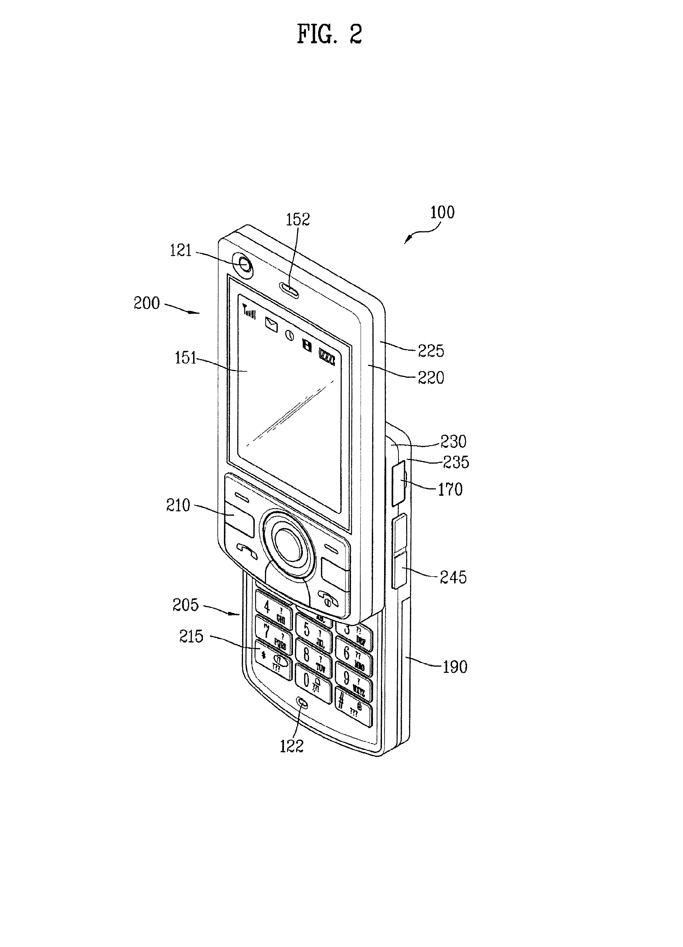

Next, FIG. 2 is a perspective view of a front side of a mobile terminal 100 according to an example of the present invention. In FIG. 2, the mobile terminal 100 is shown having a first body 200 configured to slidably cooperate with a second body 205.

The user input unit 130 described in FIG. 1 may include a first input unit such as function keys and four directional keys 210, a second input unit such as keypad 215 and a third input unit such as side keys 245. The function keys 210 are associated with the first body 200, and the keypad 215 is associated with the second body 205. The keypad includes various keys such as numbers, characters, and symbols to enable a user to place a call, prepare a text or multimedia message, and otherwise operate the mobile terminal 100.

The first body 200 slides relative to the second body 205 between open and closed positions. Further, for a folder-type mobile terminal, the first body thereof folds and unfolds relative to the second body thereof between open and closed positions. In addition, for a swing-type mobile terminal, the first body thereof swings relative to the second body thereof between open and closed positions.

In a closed position, the first body 200 is positioned over the second body 205 in such a manner that the keypad 215 is substantially or completely obscured by the first body 200. In the open position, a user can access to the keypad 215. The function keys 210 are also conveniently configured for a user to enter commands such as start, stop and scroll.

The mobile terminal 100 is also operable in either a standby mode, in which it is able to receive a call or message and to receive and respond to network control signaling or an active call mode. Generally, the mobile terminal 100 functions in the standby mode in the closed position and in an active mode in the open position. This mode configuration may be changed as required or desired.

In addition, the first body 200 is formed from a first case 220 and a second case 225, and the second body 205 is formed from a first case 230 and a second case 235. The first case 230 and second case 235 are generally formed from a suitably rigid material, such as injection molded plastic, or formed using a metallic material, such as stainless steel (STS) and titanium (Ti).

One or more intermediate cases may also be provided between the first case 230 and second case 235 of one or both of the first body 200 and second body 205. The first body 200 and second body 205 are also generally sized to receive electronic components necessary to support operation of the mobile terminal 100.

In addition, the first body 200 is shown having the camera 121 and the audio output unit 152, which is configured as a speaker, positioned relative to the display 151. The camera 121 may also be constructed such that it can be selectively positioned relative to first body 200 such as by rotation or swiveling.

Further, the function keys 210 are positioned adjacent to a lower side of the display 151, which is shown implemented as an LCD or OLED. The display 151 may also be configured as a touch screen having an underlying touchpad which generates signals responsive to user contact with the touchscreen, such as with a finger or stylus.

Also, the second body 205 is shown having the microphone 122 positioned adjacent to the keypad 215 and having the side keys 245, which are one type of a user input unit as mentioned above, positioned along the side of second body 205. Preferably, the side keys 245 are configured as hot keys, such that the side keys 245 are associated with a particular function of the mobile terminal 100. The interface unit 170 is also shown positioned adjacent to the side keys 245, and the power supply 190 in a form of a battery is shown located on a lower portion of the second body 205.

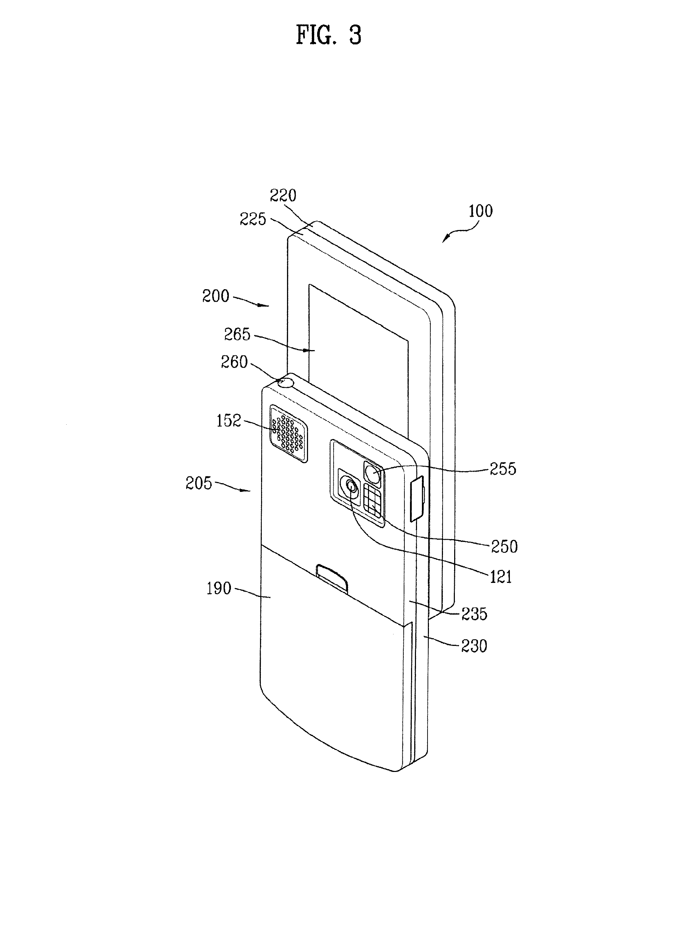

Next, FIG. 3 is a rear perspective view of the mobile terminal 100 shown in FIG. 2. In more detail, FIG. 3 shows the second body 205 having the camera 121 with an associated flash 250 and mirror 255. The flash 250 operates in conjunction with the camera 121, and the mirror 255 is useful for assisting a user to position the camera 121 in a self-portrait mode.

Further, the camera 121 of the second body 205 faces a direction which is opposite to a direction faced by the camera 121 of the first body 200 (FIG. 2). Each of the cameras 121 of the first body 200 and second body 205 may also have the same or different capabilities.

In one example, the camera 121 of the first body 200 operates with a relatively lower resolution than the camera 121 of the second body 205. Such an arrangement works well during a video conference, for example, in which reverse link bandwidth capabilities may be limited. The relatively higher resolution of the camera 121 of the second body 205 (FIG. 3) is useful for obtaining higher quality pictures for later use or for communicating with other parties.

In addition, the second body 205 also includes an audio output module 152 located on an upper side of the second body and which is configured as a speaker. The audio output modules 152 of the first body 200 and second body 205 may also cooperate together to provide stereo output. Moreover, either or both of these audio output modules 152 may be configured to operate as a speakerphone.

Further, a broadcast signal receiving antenna 260 is shown located at an upper end of the second body 205. The antenna 260 functions in cooperation with the broadcast receiving module 111 (FIG. 1). The antenna 260 may also be fixed or configured to retract into the second body 205. Also, the rear side of the first body 200 includes a slide module 265, which slidably couples with a corresponding slide module located on the front side of the second body 205.

It is understood that the illustrated arrangement of the various components of the first body 200 and second body 205 may be modified as required or desired. In general, some or all of the components of one body may alternatively be implemented on the other body. In addition, the location and relative positioning of such components may be positioned at locations which differ from those shown by the representative figures.

In addition, the mobile terminal 100 of Figs. 1-3 may be configured to operate within a communication system which transmits data via frames or packets, including both wireless and wired communication systems, and satellite-based communication systems. Such communication systems utilize different air interfaces and/or physical layers.

Examples of air interfaces utilized by the communication systems include frequency division multiple access (FDMA), time division multiple access (TDMA), code division multiple access (CDMA), the universal mobile telecommunications system (UMTS), the long term evolution (LTE) of the UMTS, and the global system for mobile communications (GSM). By way of non-limiting example only, further description will relate to a CDMA communication system, but such teachings apply equally to other system types.

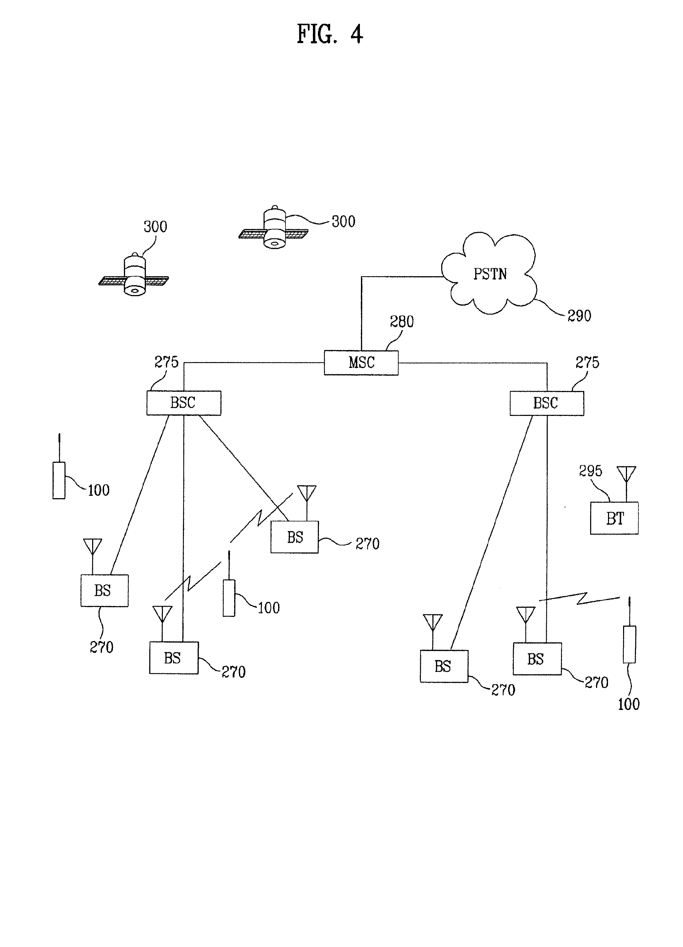

Referring to FIG. 4, a CDMA wireless communication system is shown having a plurality of mobile terminals 100, a plurality of base stations 270, a plurality of base station controllers (BSCs) 275, and a mobile switching center (MSC) 280. The MSC 280 is configured to interface with a public switch telephone network (PSTN) 290. The MSC 280 is also configured to interface with the BSCs 275.

Further, the BSCs 275 are coupled to the base stations 270 via backhaul lines. The backhaul lines may be configured in accordance with any of several interfaces including, for example, E1/T1, ATM, IP, PPP, Frame Relay, HDSL, ADSL, or xDSL. The communication system may also include more than two BSCs 275.

Also, each base station 270 may include one or more sectors, each sector having an omnidirectional antenna or an antenna pointed in a particular direction radially away from the base station 270. Alternatively, each sector may include two antennas for diversity reception. Each base station 270 may also be configured to support a plurality of frequency assignments, with each frequency assignment having a particular spectrum (e.g., 1.25 MHz, 5 MHz).

In addition, the intersection of a sector and frequency assignment may be referred to as a CDMA channel. The base stations 270 may also be referred to as base station transceiver subsystems (BTSs). In some instances, the term "base station" may be used to refer collectively to a BSC 275, and one or more base stations 270. Further, the base stations 270 may also be denoted as "cell sites." Alternatively, individual sectors of a given base station 270 may be referred to as cell sites.

A terrestrial digital multimedia broadcasting (DMB) transmitter 295 is also shown broadcasting to mobile terminals 100 operating within the system. The broadcast receiving module 111 (FIG. 1) of the mobile terminal 100 is generally configured to receive broadcast signals transmitted by the DMB transmitter 295. Similar arrangements may be implemented for other types of broadcast and multicast signaling as discussed above.

FIG. 4 further depicts several global positioning system (GPS) satellites 300. Such satellites facilitate locating the position of some or all of the mobile terminals 100. Two satellites are depicted, but useful positioning information may be obtained with greater or fewer satellites.

In addition, the position-location module 115 (FIG. 1) of the mobile terminal 100 is generally configured to cooperate with the satellites 300 to obtain desired position information. Other types of position detection technology, such as location technology may be used in addition to or instead of GPS location technology. Some or all of the GPS satellites 300 may alternatively or additionally be configured to provide satellite DMB transmissions.

During operation of the wireless communication system, the base stations 270 receive sets of reverse-link signals from various mobile terminals 100. Further, the mobile terminals 100 engage in calls, messaging, and other communications. Each reverse-link signal received by a given base station 270 is also processed within that base station 270. The resulting data is then forwarded to an associated BSC 275.

In addition, the BSC 275 provides call resource allocation and mobility management functionality including soft handoffs between the base stations 270. The BSCs 275 also route the received data to the MSC 280, which provides additional routing services for interfacing with the PSTN 290.

Similarly, the PSTN interfaces with the MSC 280, and the MSC 280 interfaces with the BSCs 275. The BSCs 275 control the base stations 270 to transmit sets of forward-link signals to the mobile terminals 100.

In the following description, a control method applicable to the above-configured mobile terminal 100 is explained with respect to various embodiments. Further, the following embodiments can be implemented independently or through combinations thereof. The following embodiments refer to the display 151 including a touchscreen 400.

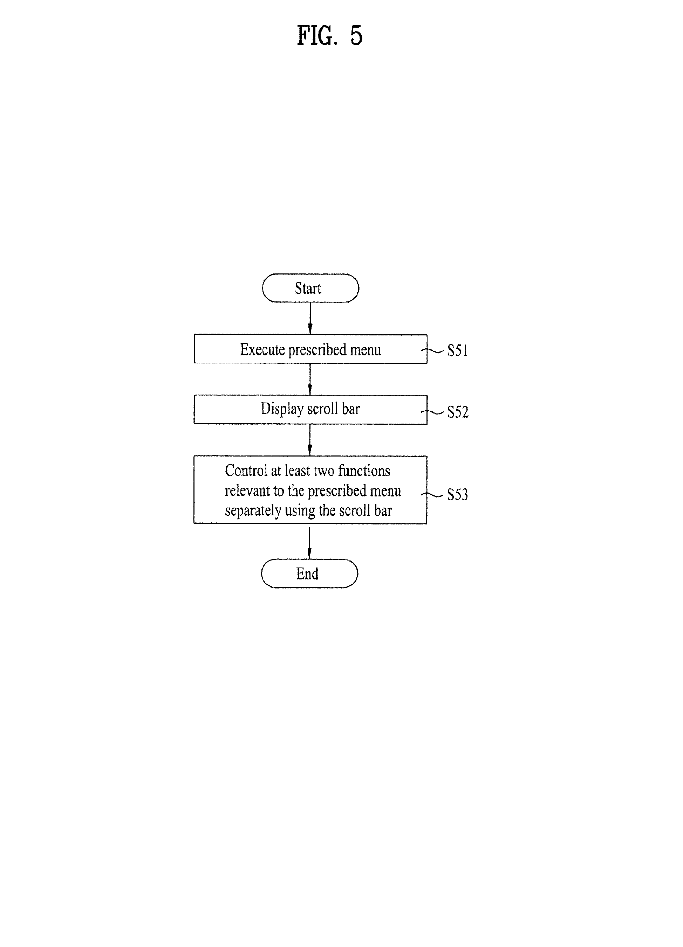

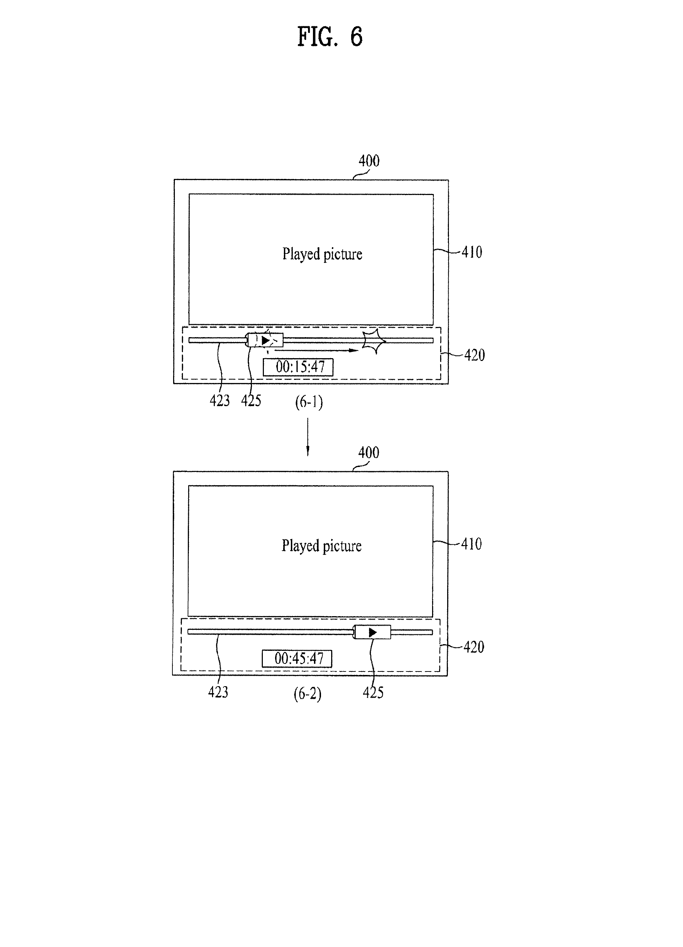

FIG. 5 is a flowchart illustrating a method of controlling a mobile terminal according to an embodiment of the present invention, and FIG. 6 are overviews of display screens illustrating the method of controlling the mobile terminal.

As shown in FIG. 5, a multimedia play menu is being executed on the mobile terminal 100 (S51). Further, the multimedia may include a moving picture or audio. In this example, it is assumed the multimedia includes the moving picture. However, the method is also applicable to audio playback. In addition, the moving picture may be stored in the memory 160, or may be received from an external server via the wireless communication unit 110.

Then, as shown in (6-1) of FIG. 6, the movie is being played and shown on the touchscreen 400. The touchscreen 400 includes a played image area 410 for displaying the played image of the moving picture and a control area 420 for controlling the playback of the moving picture.

As shown in FIG. 6, a scroll region 423 extending in right-to-left direction and a scroll bar 425 within the scroll region 423 are displayed in the control area 420 (S420) Further, the scroll bar 425 indicates a viewpoint of playing back the moving picture (hereinafter named 'moving picture play viewpoint).

As shown in (6-1) of FIG. 6, the scroll bar 425 can be touched and dragged in a left to right or right to left direction. In this figure, the user moves the scroll bar in the left to right direction.

Then, as shown in (6-2) of FIG. 6, the moving picture play viewpoint is adjusted in proportion to the dragged distance of the scroll bar 425. Hence, the moving picture is fast forwarded to the new position set by the scroll bar.

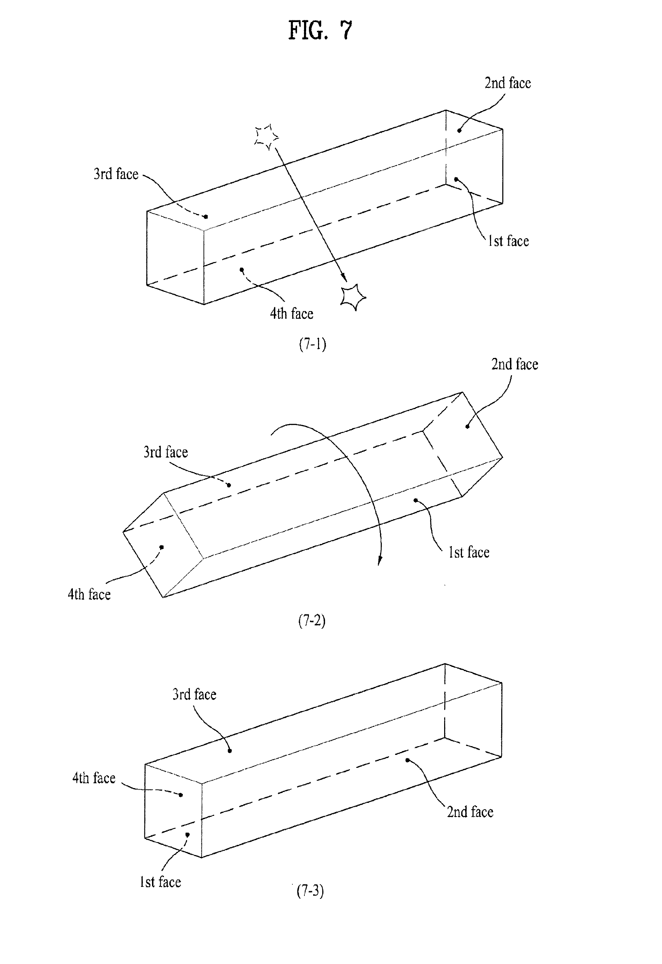

In addition, the scroll bar can be rotated to execute other functions. In more detail, and as shown in FIG. (7-1) of FIG. 7, the scroll bar includes a polyhedral shape. This is an example only, and other shapes may be provided. In FIG. 7, the polyhedral includes a square pillar shape. In addition, as shown in (7-1) of FIG. 7, the square-pillar scroll bar 425 has four faces with its first face facing the front.

The scroll bar can also be rotated by touching and dragging the scroll bar in a direction perpendicular to the extending direction of the scroll region (e.g., top to bottom or bottom to top). In the following description, the touch and drag action is simply represented as a 'touch & drag' operation of the scroll bar. The scroll bar can also be rotated by the user flicking the scroll bar, hereinafter referred to as a 'flicking' operation of the square pillar.

Referring to (7-2) of FIG. 7, the square-pillar scroll bar is rotated according to the drag or flicking direction. As the scroll bar is rotated, the square-pillar scroll bar, as shown in (7-3) of FIG. 7, is arranged so that a second face of its four lateral sides is displayed in front.

Therefore, the square-pillar scroll bar can be rotated to show a different lateral side in front each time a touch & drag or flicking operation is performed. Further, different functions relevant to the multimedia play menu are assigned to the lateral sides of the rotatable scroll bar.

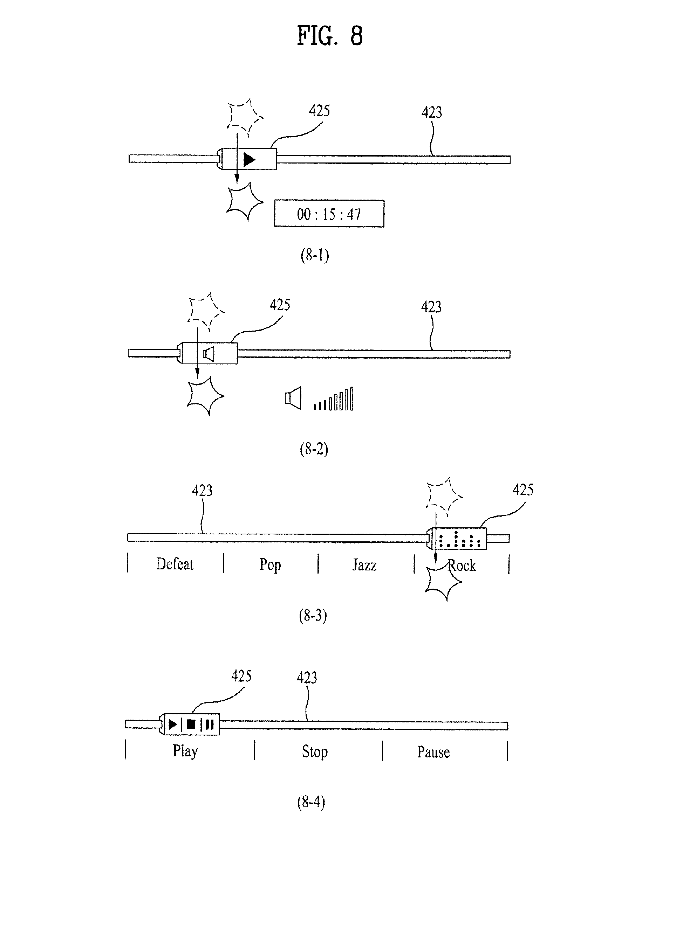

For example, FIG. 8 includes diagrams illustrating an operation of a scroll bar according to an embodiment of the present invention. Referring to (8-1) of FIG. 8, the first face of the scroll bar 425 is assigned the moving picture play viewpoint adjustment function. Therefore, the scroll bar 425 can be used for the moving picture play viewpoint adjustment function by rotating the scroll bar 425. Then, if the user touches and drags scroll bar 425 in the scroll region extending direction, the moving picture play viewpoint can be accordingly adjusted.

Then, when the user again rotates the scroll bar 425, the scroll bar 425 is rotated so that the second face faces a front direction as shown in (8-2) of FIG. 8. Further, in this example, the second face of the scroll bar 425 is assigned the audio volume function of the moving picture. Thus, the scroll bar 425 can be used for the audio volume function of the moving picture. The user can then adjust the audio volume of the moving picture by moving or sliding the scroll bar 425 in the scroll region extending direction.

Also, because the scroll bar 425 is located in the scroll region 423 so as to be in proportion to a current audio volume size, the position of the scroll bar 425 shown in (8-2) of FIG. 8 may differ from that of the scroll bar 425 shown in (8-1) of FIG. 8.

In addition, as shown in (8-3) of FIG. 8, the user touches and drags (or flicks) the scroll bar 425 one more time in the vertical direction. Thus, the third face of the scroll bar 425 is displayed to the user. In addition, the third face is assigned the audio equalizer function of the moving picture and thus the user can move the scroll bar 425 in the horizontal direction to select an equalizer type of the moving picture.

Next, the user again touches & drags the scroll bar 425 in the vertical direction. As shown in (8-4) of FIG. 8, the scroll bar 425 is rotated so that the fourth face including a play control function (e.g., play, stop, pause, etc.) faces the user. Thus, the user can select a play mode of the moving picture by sliding the scroll bar 425 in the horizontal direction.

Further, other functions can be assigned to the different faces of the scroll bar 425. For example, a caption size adjustment function, a screen size adjustment function, a brightness adjustment function, a color adjustment function, a zoom function and the like can be assigned to the faces of the scroll bar 425.

The functions may also be assigned by the manufacturer of the terminal and may be changed by the user using the appropriate menu options provided by the mobile terminal according to an example of the present invention.

In addition, in the above-description of FIG. 8, the scroll bar 425 has the square pillar shape and four kinds of functions are assigned to the four lateral sides of the scroll bar, respectively. However, the present embodiment is non-limited by the above description. For instance, the scroll bar 425 can have a triangular pillar shape or one of other polygonal pillar shapes. Hence, three kinds of functions or at least five kinds of functions can be assigned to the lateral sides of the scroll bar, respectively.

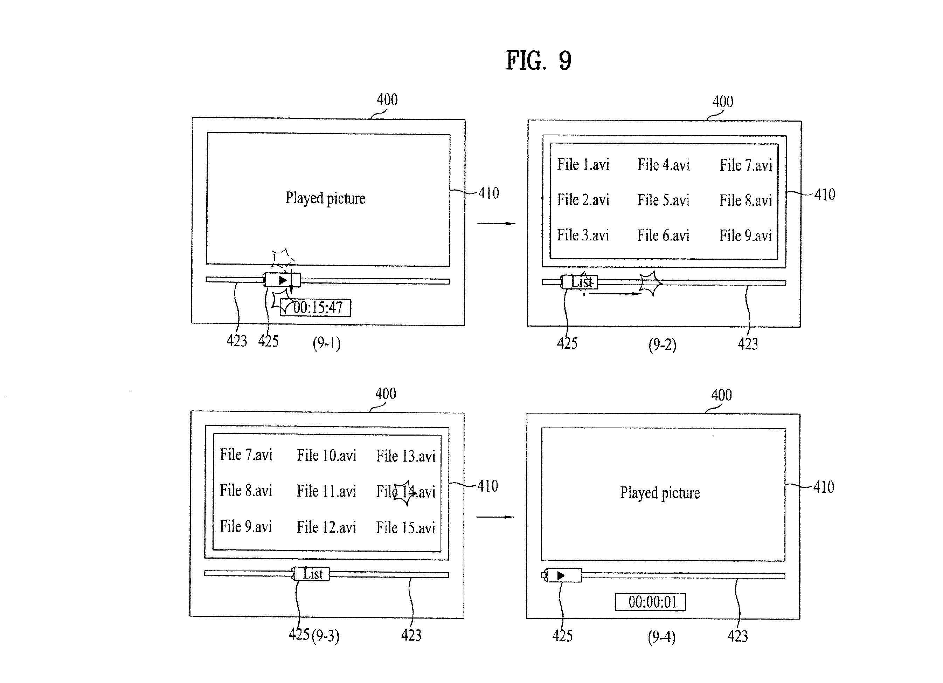

Next, and with reference to FIG. 9, a file list view function (e.g., a multimedia file view function) is assigned to one of the lateral sides of the scroll bar 425. In more detail, as shown in (9-1) of FIG. 9, a moving picture play menu is being executed on the mobile terminal 100. Further, the played image area 410 for displaying a played image of the moving picture and the control area for controlling the playback of the moving picture exist in the touchscreen 400.

In addition, the scroll region 423 extends in the right-to-left direction and the scroll bar 425 is within the scroll region 423. Referring to (9-1) of FIG. 9, the moving picture play viewpoint adjustment function is assigned to a front-seen (first) face of the scroll bar 425. Then, if the scroll bar 425 is moved in the horizontal direction, the user can adjust a play point of the moving picture.

Then, as shown in (9-2) of FIG. 9, the user vertically touches and drags the scroll bar 425. That is, the scroll bar 425 is rotated so that another face having a file list function is seen in front. The controller 180 then displays a list of moving picture files on the touchscreen 400.

As shown in (9-3) of FIG. 9, the user can move the scroll bar left or right so the list of the moving picture files is scrolled. The user can also select a specific moving picture from the scrolled list by touching the moving picture. If so, the selected moving picture file is played as shown in (9-4) of FIG. 9.

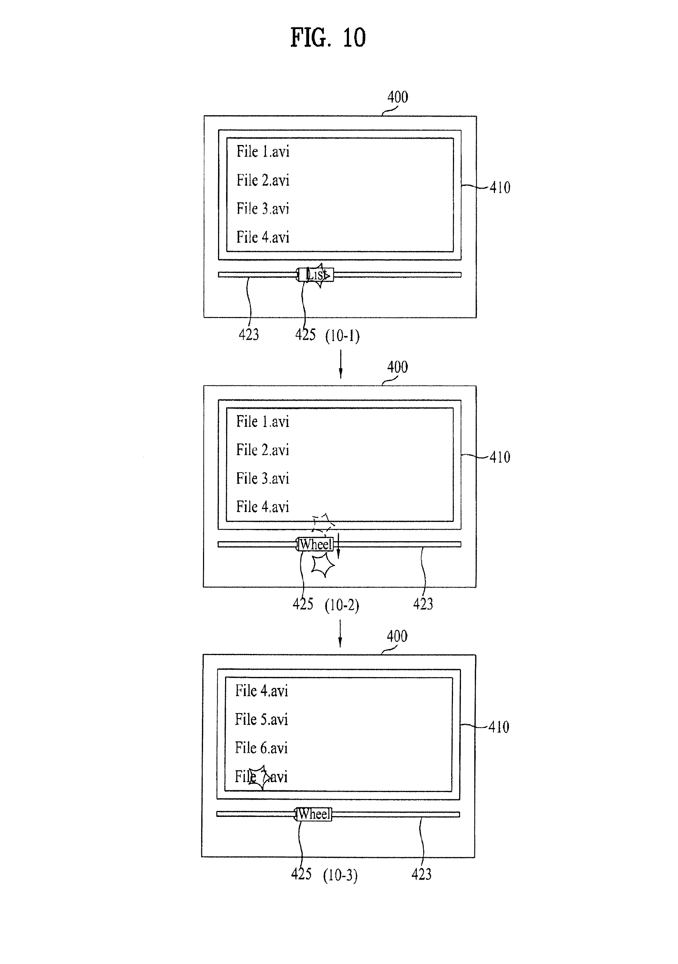

In addition, FIG. 10 illustrates the above-described file list view function being implemented in a different manner. Referring to (10-1) of FIG. 10, a moving picture play menu is being executed in the mobile terminal 100. The scroll bar 425 is again arranged on the touchscreen 400 in a manner that the face having a file list function assigned thereto is seen in front.

Also, the scroll bar 425 is usable for the file list function and a list of moving picture files is displayed on the touchscreen 400. Then, the scroll bar 425 is touched and released without dragging the scroll bar 425. Thus, as shown in (10-2) of FIG. 10, the controller 180 changes the scroll bar 425 into a wheel bar.

If the user vertically touches and drags the wheel bar 425, the controller 180 scrolls the list of moving picture files as far as the wheel bar 425 is rotated, as shown in (10-3) of FIG. 10. In (10-2) of Fig. 10, if the user again touches the wheel bar 425 without dragging the scroll bar 425, the controller 180 returns the wheel bar 425 to the scroll bar 425 shown in (10-1) of FIG. 10.

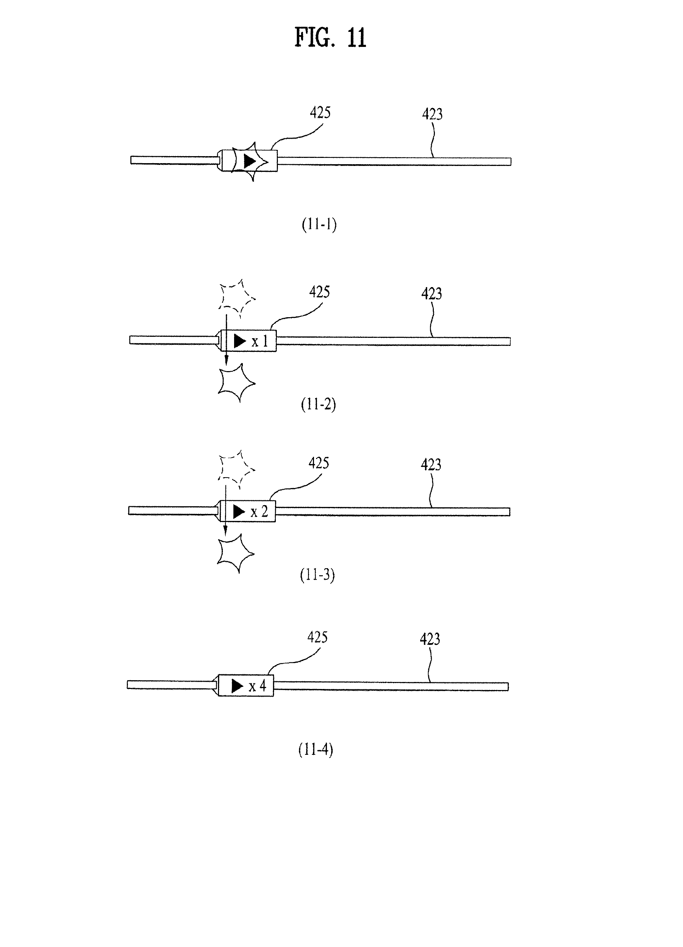

Meanwhile, when the user touches and releases the scroll bar 425, a sub-function of the function assigned to the face seen in front can be entered. This feature will now be explained in more detail with reference to FIG. 11.

As shown in (11-1) of FIG. 11, the scroll bar 425 is usable for the function assigned to the face seen in front, i.e., the moving picture play viewpoint adjustment function. In this example, the user simply touches the scroll bar 425 without dragging the scroll bar 425.

Referring to (11-2) of FIG. 11, sub-functions of the moving picture play viewpoint adjustment function are assigned to the faces of the scroll bar 425, respectively. Other touch operations are also possible to select the sub-functions. For example, the user can perform a double touch operation or select a displayed separate icon for selecting the sub-functions.

As shown in (11-2) of FIG. 11, a function that enables the moving picture play viewpoint to be shifted at the speed-x1 of a normal play speed of the unscrolled scroll bar 425 is assigned to the front face of the scroll bar 425.

The user can then rotate the scroll bar 425 to proceed through the different sub-functions. For example, as shown in (11-3) of FIG. 11, the user touches and drags the scroll bar 425 to select another function for enabling the moving picture play viewpoint to be shifted at the speed-x2 of the normal play speed.

In addition, (11-4) of FIG. 11 illustrates the scroll bar 425 being rotated to another face that includes a function for enabling the moving picture play viewpoint to be shifted at the speed-x4 of the normal play speed of the unscrolled scroll bar 425. Then, the user can simply touch the scroll bar 425 without dragging the scroll bar 425 to return the scroll bar 425 to the state shown in (11-1) of FIG. 11.

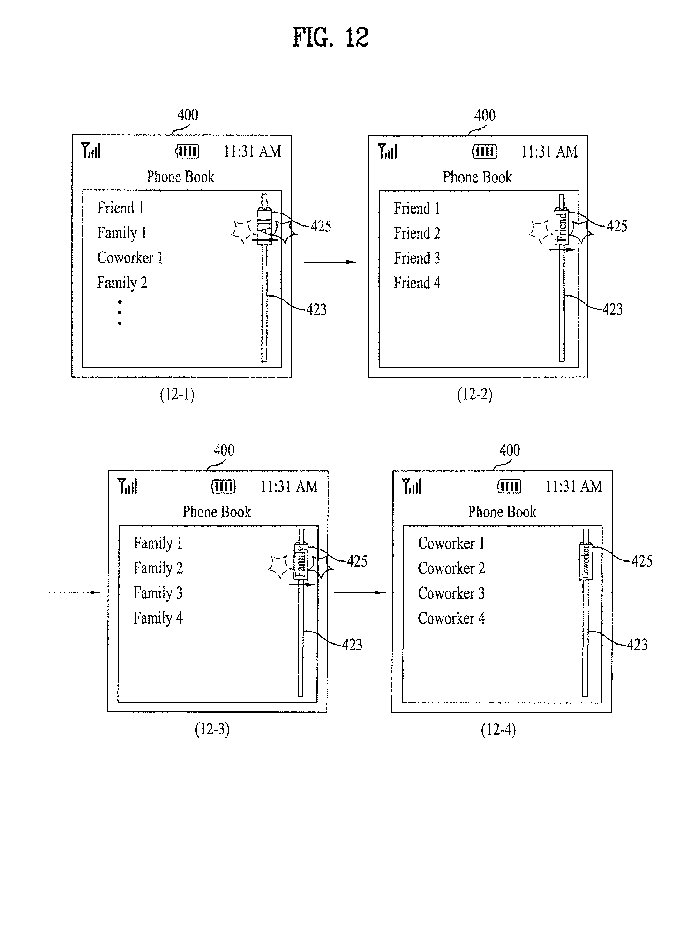

Next, FIG. 12 illustrates functions associated with a phonebook menu being assigned to the lateral sides of the rotatable scroll bar 425. In more detail, as shown in (12-1) of FIG. 12, the phonebook menu is being executed in the mobile terminal 100. In this example, the phonebook is divided into at least two groups (e.g., friend group, family group, colleague group, etc.).

Further, the controller 180 displays a phone number list on the touchscreen 400, the scroll region 423 extends in top-to-bottom direction and the scroll bar 425 is placed within the scroll region 423 on the touchscreen 400.

Accordingly, when the user scrolls the scroll bar 425 up and down, the phone number list is correspondingly scrolled. In addition, as shown in (12-1) of FIG. 12, a function for displaying a phone number list of all groups is assigned to a first face of the scroll bar 425.

The user can then perform a touch and drag operation in the horizontal direction. That is, as shown in (12-2) of FIG. 12, the user rotates the scroll bar 425 so that a different face including a function for displaying a phone number list of the friend group is displayed to face the user. Hence, the controller 180 displays the phone number list of the friend group.

Another horizontal touch & drag operation results in the scroll bar 425 being further rotated so that a different face including a function for displaying a phone number list of the family group is facing the user as shown in (12-3) of FIG. 12. Hence, the controller 180 displays the phone number list of the family group.

Still another horizontal touch & drag operation results in the scroll bar 425 being further rotated so that a different face including a function for displaying a phone number list of the colleague group is displayed to face the user. Hence, the controller 180 displays the phone number list of the colleague group.

Further, when a specific correspondent party is selected from the phone number list displayed on the touchscreen 400, the controller 180 initiates a phone call to the selected correspondent party or displays information on the selected correspondent party.

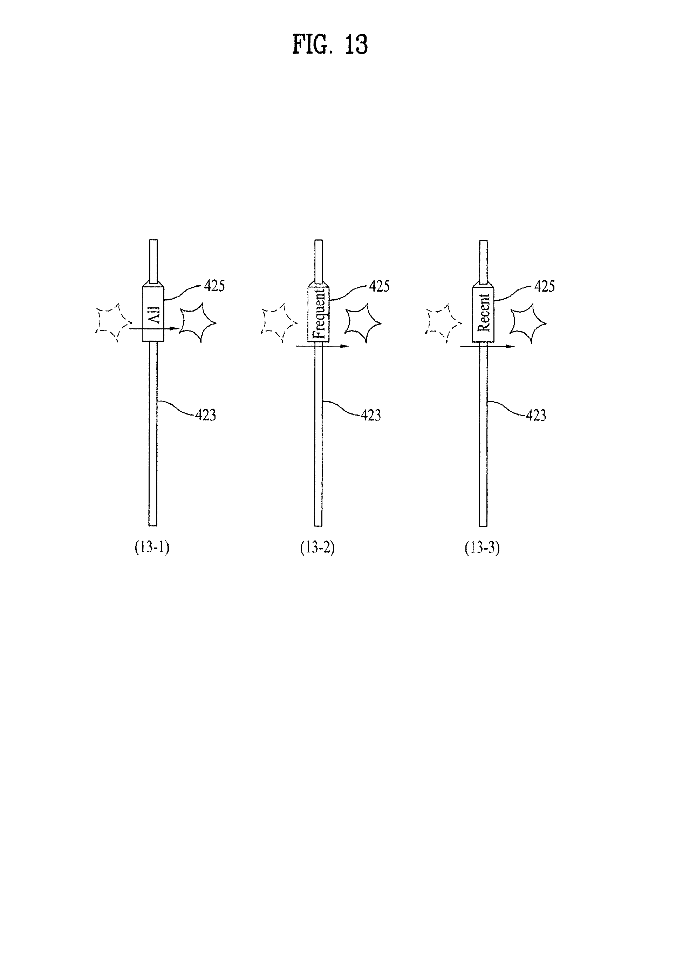

In addition, FIG. 12 illustrates the phone number list being displayed per group through action on the scroll bar 425. However, the phone number list can be viewed through the movement of the scroll bar 425 in a configuration different from the group configuration. FIG. 13 illustrates one example of such a different configuration.

Referring to (13-1) of FIG. 13, a function for displaying all phone number lists is assigned to the front face of the scroll bar 425. When the user performs a horizontal touch & drag operation on the scroll bar 425, the scroll bar 425 is rotated so that a different face including a function for displaying phone number lists sorted in order of use frequency is displayed facing the user as shown in (13-2) of FIG. 13. Hence, the controller 180 displays the phone number lists being sorted in use frequency order.

Then, when the user performs yet another horizontal touch & drag operation on the scroll bar 425, the scroll bar 425 is again rotated so that another different face including a function for displaying phone number lists sorted in order of recent use (or recent storage) faces the user. Hence, the controller 180 displays the phone number lists being sorted in order of recent use (or recent storage).

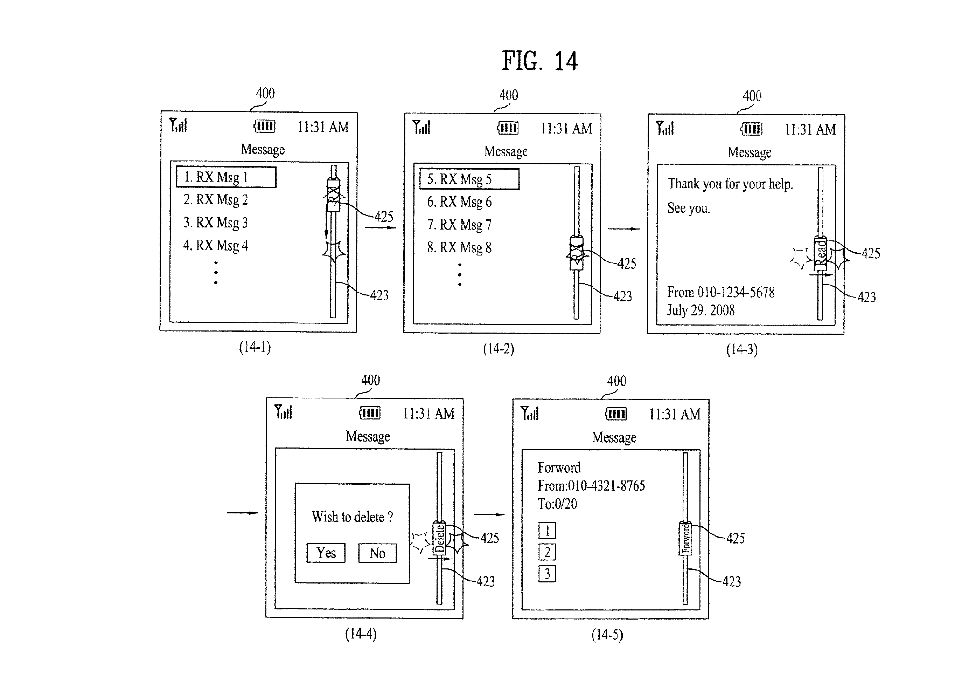

Next, FIG. 14 illustrates an embodiment in which functions associated with a message menu are assigned to lateral sides of the rotatable scroll bar 425. In more detail, referring to (14-1) of FIG. 14, the controller 180 executes the message menu in the mobile terminal 100.

As shown, the controller 180 displays the received message list. Also, the scroll region 423 extends in the top-to-bottom direction and the scroll bar 425 is placed within the scroll region 423.

Then, when the user scrolls the scroll bar 425 in a top to bottom fashion, the controller 180 scrolls the received message list bottom to top to correspond to the scrolling of the scroll bar 425 as shown in (14-2) of FIG. 14.

Similarly, when the user touches and drags the received message list in a bottom to top fashion, the user can see a received message that is located at a most upper part in the received message list.

Further, as shown, the top most displayed message is also highlighted indicating the message is selected. Alternatively, the user can select a desired message by simply touching the desired message. The touched message is then highlighted indicating it is the currently selected message

In addition, if the user touches and drags the scroll bar 425 in a bottom to top fashion, the controller 180 scrolls the received message list top to bottom. A received message located at a lowest part in the received message list can also be automatically highlighted indicating it is the selected message.

Subsequently, referring to (14-3) of FIG. 14, when the user performs a horizontal touch & drag operation on the scroll bar 425, the controller 180 displays a text of the selected received message. Referring to (14-4) of FIG. 14, when the user performs another horizontal touch & drag operation on the scroll bar 425, the controller 180 displays a screen for deleting the selected received message.

Referring to (14-5) of FIG. 14, when the user performs still another horizontal touch & drag operation on the scroll bar 425, the controller 180 displays a screen for delivering the selected received message on the touchscreen 400.

In addition, FIG. 14 illustrates the different faces of the scroll bar 425 including a message list view function, a message content view function, a message delete function and a message delivery function. In a similar manner, the present embodiment can be extended to enable a message reply function to replace or to be added to the above-described functions.

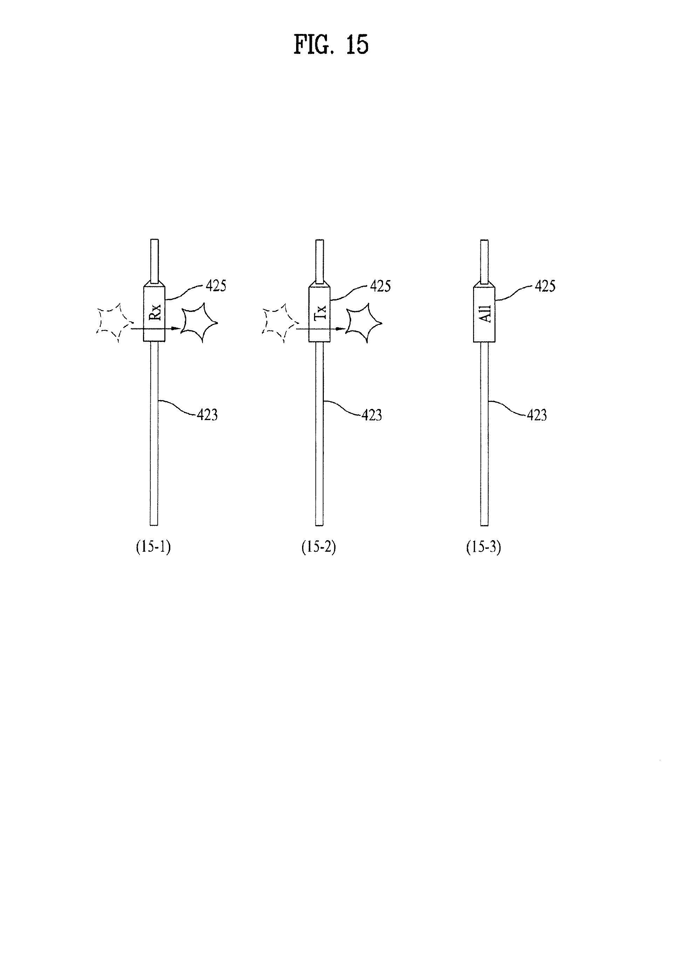

Alternatively, the faces of the scroll bar 425 can be assigned a received message view function, an sent message view function and a received & sent message view function, as shown in (15-1) to (15-3) of FIG. 15. The operations of the scroll bar 425 shown in FIG. 15 are similar to the operations of the scroll bar 425 shown in FIG. 14.

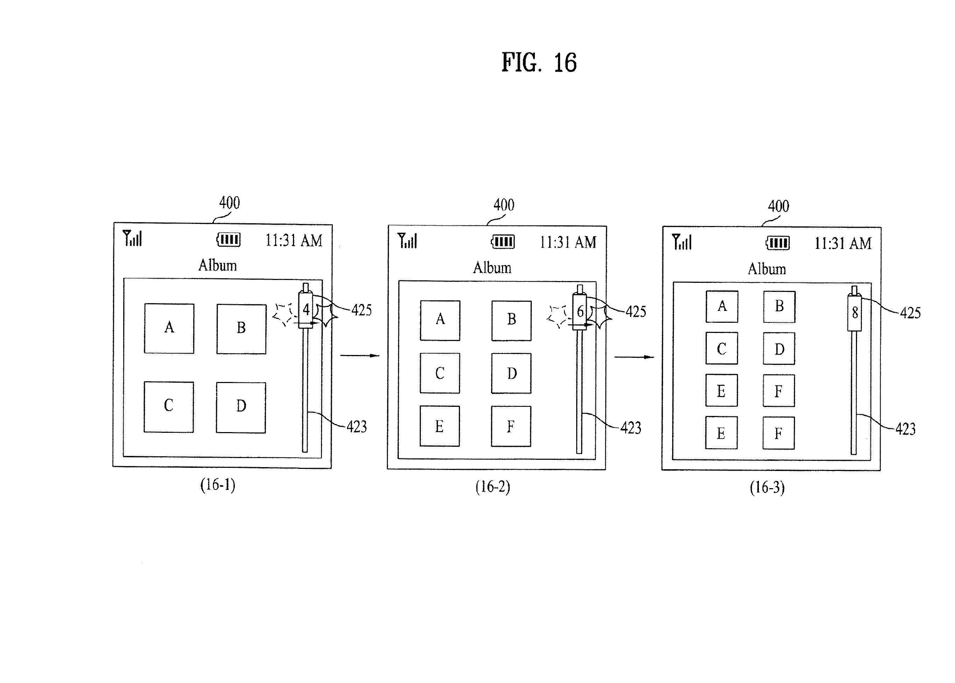

Next. FIG. 16 illustrates the faces of the scroll bar 425 being assigned functions associated with a photo album menu. Referring to (16-1) of FIG. 16, the photo album menu is being executed in the mobile terminal 100.

In addition, the controller 180 also displays a photo thumbnail list on the touchscreen 400. Similar to some of the other embodiments, the scroll region 423 extends in the top-to-bottom direction and the scroll bar 425 is placed within the scroll region 423. In this example, a maximum of four thumbnails are listed on the touchscreen 400. Therefore, when the user touches and drags the photo thumbnail list upward or downward, the controller 180 displays a maximum of four thumbnails.

Then, when the user performs a horizontal touch & drag operation on the scroll bar 425, a maximum of six thumbnails are listed in one area on the touchscreen 400, for example, as shown in (16-2) of FIG. 16. In addition, a total size of the maximum of six thumbnails displayed can be equal to or smaller than that of the maximum of four thumbnails.

Then, when the user performs a touch and drag operation in an upward or downward manner, the controller 180 scrolls the thumbnail list in the same corresponding manner. Also, when the user performs another horizontal touch & drag operation on the scroll bar 425, the controller 180 displays a maximum of eight thumbnails as shown in (16-3) of FIG. 16.

Again, the total size of the maximum of eight thumbnails can be equal to or smaller than that of the maximum of six thumbnails. The user can then scroll through the displayed thumbnails by moving the scroll bar 425 upward or downward. Therefore, a terminal user can adjust the maximum number of thumbnails displayed in a single area on the touchscreen 400 by performing the horizontal touch & drag operation on the scroll bar 425.

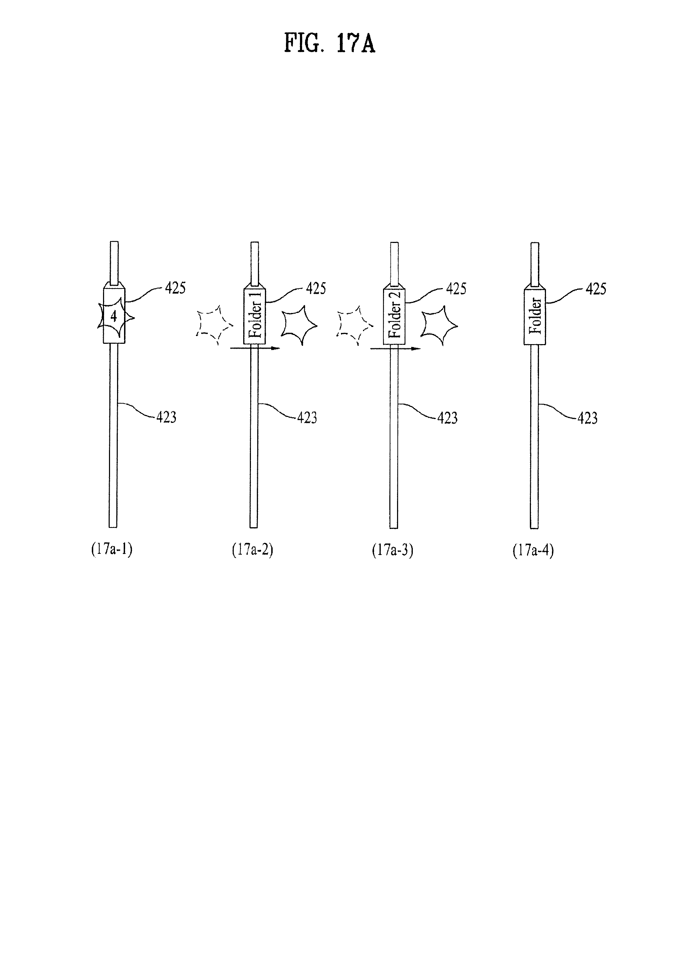

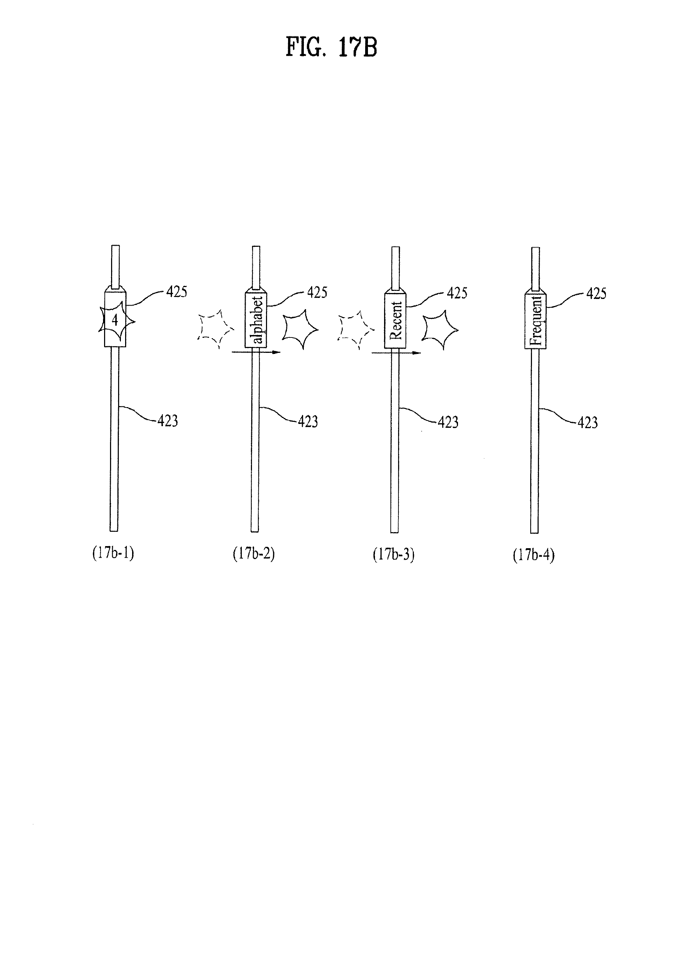

Next, FIGS. 17A and 17B are diagrams of the scroll bar 425 shown in FIG. 16 being used in an alternative embodiment. Referring to (17A-1) of FIG. 17, a front or first face of the scroll bar 425 is assigned a function for viewing a maximum of four thumbnails. Then, as shown in (17A-2) to (17A-4) of FIG. 17, the other faces of the scroll bar 425 are assigned sub-functions.

In particular, each of the sub-functions is related to displaying a thumbnail of a specific folder. For example, (17A-2) of FIG. 17 illustrates a sub-function for viewing a maximum of four thumbnails of a first folder associated with the photo album being assigned to one face of the scroll bar. Hence, the controller 180 displays the maximum of four thumbnails of the first folder on the touchscreen 400.

Then, when the user performs a horizontal touch & drag operation on the scroll bar 425, the scroll bar 425 is rotated so that a different face of the scroll bar 425 including a sub-function for viewing a maximum of four thumbnails of a second folder associated with the photo album is displayed to face the user. Hence, the controller 180 displays the maximum of four thumbnails of the second folder on the touchscreen 400.

When the user performs another horizontal touch & drag operation on the scroll bar 425, the scroll bar 425 is rotated again so that a different face of the scroll bar 425 including a sub-function for viewing a maximum of four thumbnails of a third folder associated with the photo album is displayed as shown in (17A-4) of FIG. 17. The controller 180 then displays the maximum of four thumbnails of the third folder on the touchscreen 400. Thus, a terminal user is able to view and select a photo of a specific folder using the scroll bar 425.

Referring to (17B-1) of FIG. 17, a function for viewing a maximum of four thumbnails is assigned to one face of the scroll bar 425. In this example, the user then simply touches the scroll bar 425, and as shown in (17B-2) to (17B-4) of FIG. 17, the sub-functions are assigned to the other faces of the scroll bar 425.

That is, each of the sub-functions is related to a thumbnail list order. For example, (17B-2) of FIG. 17 illustrates a sub-function for enabling a maximum of four thumbnails to be listed in alphabetic order. Hence, the maximum of four thumbnails can be listed in alphabetic order on the touchscreen 400.

The, when the user performs a horizontal touch & drag operation on the scroll bar 425, the scroll bar 425 is rotated so that a different face of the scroll bar 425 including a sub-function for enabling a maximum of four thumbnails to be listed in order of recent storage (or recent execution) as shown in (17B-3) of FIG. 17. The maximum of four thumbnails are then listed on the touchscreen 400 in order of the recent storage (or recent execution).

Then, when the user performs another horizontal touch & drag operation on the scroll bar 425, the scroll bar 425 is rotated so that a different face of the scroll bar 425 including a sub-function for enabling a maximum of four thumbnails to be listed in order of execution frequency as shown in (17B-4) of FIG. 17. The controller 180 then displays the maximum of four thumbnails on the touchscreen 400 in order of the execution frequency.

Therefore, a terminal user can list the thumbnails in a user-specific manner using the scroll bar 425. Further, when the user selects a specific thumbnail from the displayed thumbnails, a photo of the selected thumbnail is displayed in a full screen.

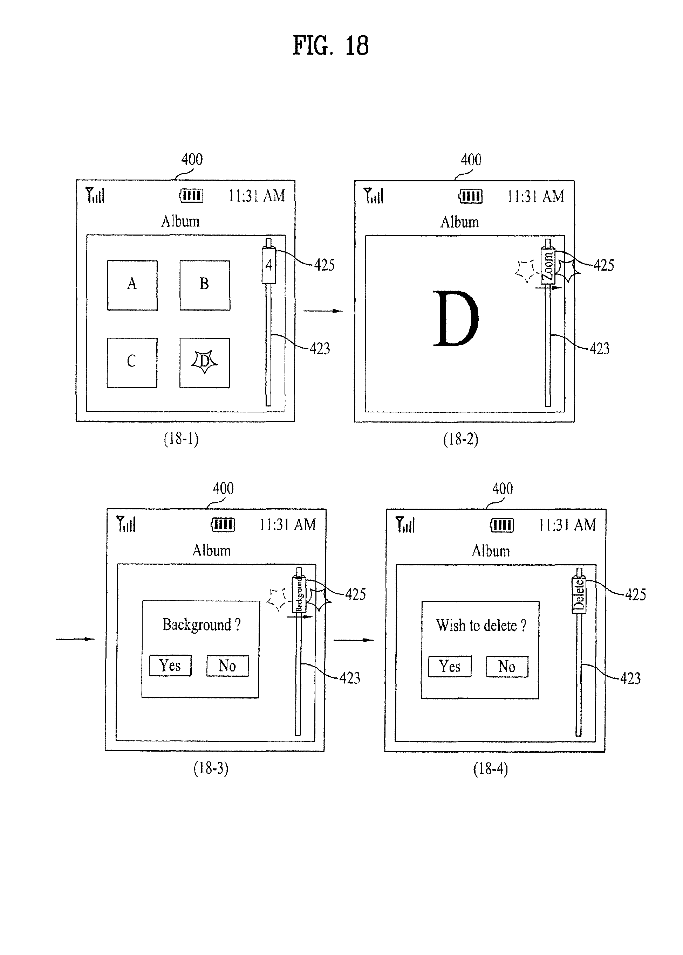

In addition, as shown in (18-1) of FIG. 18, a function for viewing a maximum of four thumbnails in a single picture is assigned to one face of the scroll bar 425. Then, the user selects one of the displayed thumbnails (e.g., by touching the thumbnail).

Then, as shown in (18-2) of FIG. 18, the controller 180 displays a photo of the selected thumbnail as a full screen on the touchscreen 400. Further, the controller 180 automatically assigns a new function relevant to the photo of the thumbnail displayed as a full screen to each face of the scroll bar 425.

For example, as shown in (18-2) of FIG. 18, the controller 180 assigns a function for zooming in or out the photo to one face of the scroll bar 425. Thus, the user can zoom in or out the photo by moving the scroll bar 425 in the scroll bar extending direction.

When the user performs a horizontal touch & drag operation on the scroll bar 425, the controller 180 displays a screen for setting the displayed photo to be a background picture of the mobile terminal as shown in (18-3) of FIG. 18. When the user performs another horizontal touch & drag operation on the scroll bar 425, the controller 180 provides a screen for deleting the photo as shown in (18-3) of FIG. 18.

Further, the new functions for the photo is non-limited by the above example. For instance, it is possible to provide a function relevant to changing a name of the photo, moving the photo to another folder, etc.

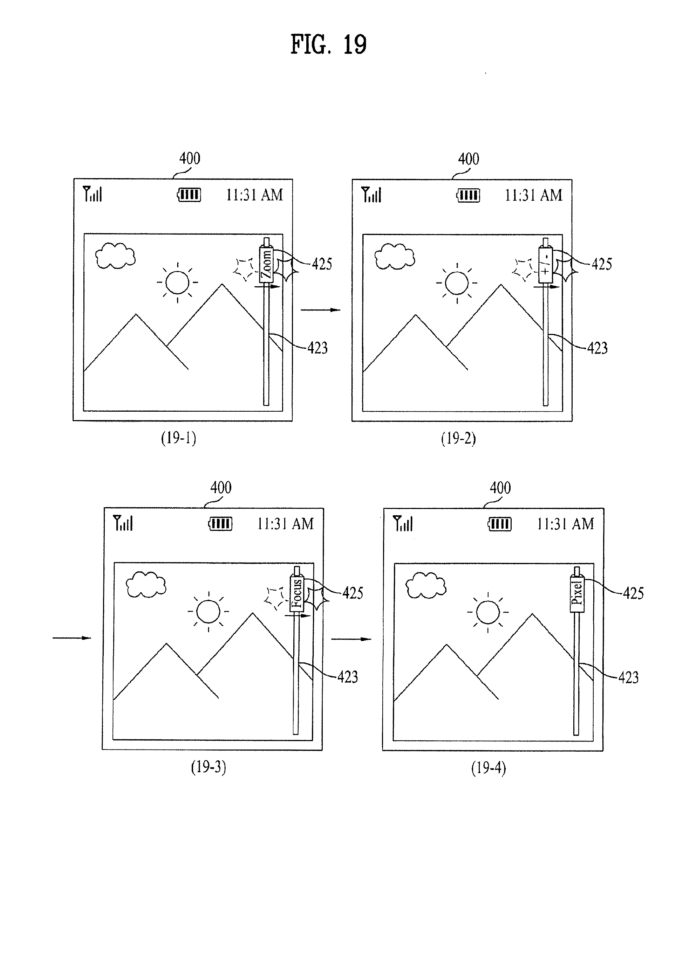

Next, Fig. 19 illustrates functions relevant to a camera menu being assigned to the lateral sides of the rotatable scroll bar 425. In more detail, referring to (19-1) of FIG. 19, a camera menu is being executed in the mobile terminal 100.

In addition, the controller 180 displays a camera preview picture on the touchscreen 400, the scroll region 423 extends in the top-to-bottom direction and the scroll bar 425 is placed within the scroll region 423. Further, each face of the scroll bar 425 includes a function relevant to the camera menu.

In particular, one face of the scroll bar 425 includes a zoom adjustment function. Hence, the user can zoom in and out the preview picture by moving the scroll bar 425 up or down. Then, when the user performs a horizontal touch & drag operation on the scroll bar 425, the scroll bar 425 is rotated so that a different face of the scroll bar 425 including an exposure control function is displayed to face the user as shown in (19-2) of FIG. 19. Hence, when the user scrolls the scroll bar 425, an exposure of the preview picture is adjusted.

When the user performs another horizontal touch & drag operation on the scroll bar 425, the scroll bar 425 is rotated so that another different face of the scroll bar 425 including a focus control function is displayed to face the user as shown in (19-3) of FIG. 19. Hence, the user can adjust a focus of the preview picture by scrolling the scroll bar 425.

In addition, (19-4) of FIG. 19 illustrates the user another horizontal touch & drag operation on the scroll bar 425 in which the scroll bar 425 is rotated so that a further different face of the scroll bar 425 including a resolution control function is displayed. The user can then adjust a resolution of a photo to be taken according to the preview picture by scrolling the scroll bar 425.

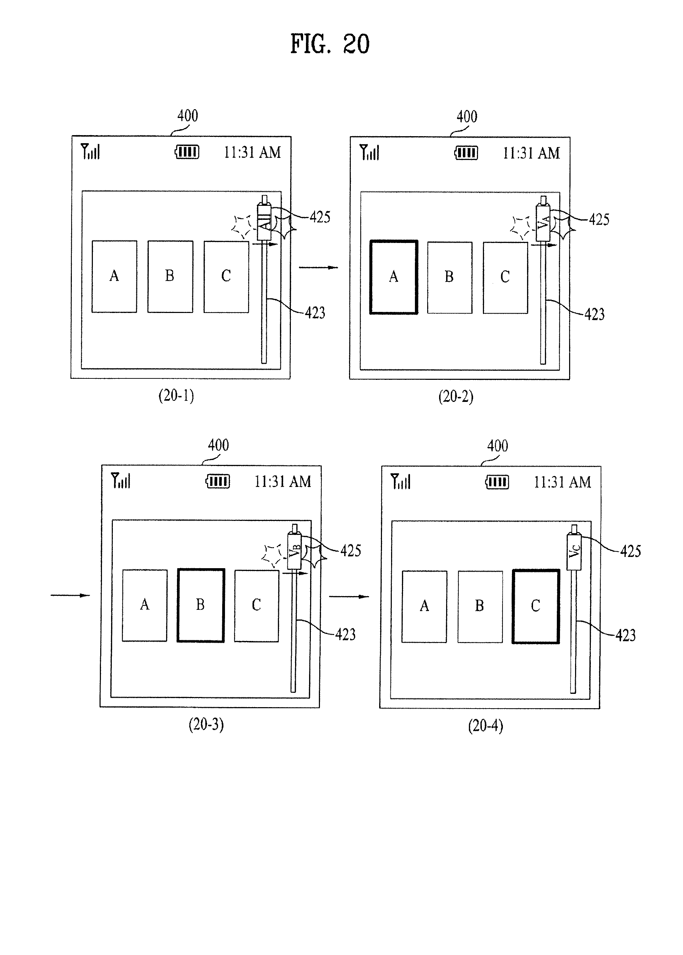

Next, FIG. 20 illustrates functions relevant to multi-user communication, which is performed between multiple users, being assigned to the lateral sides of the rotatable scroll bar 425. This example assumes that the multi-user communication is multi-user video communication. However, the present embodiment is applicable to multi-user voice communication as well.

Referring to (20-1) of FIG. 20, a multi-user communication menu is being executed in the mobile terminal 100. FIG. 20 illustrates the multi-user communication including three correspondent parties A, B and C. However, the number of the correspondent parties for the multi-user communication can be incremented or decremented.

In addition, in FIG. 20, the three correspondent parties are indicated by the images A, B and C, respectively, for illustrative convenience purposes. In a real-time video communication, the actual pictures or substitute pictures of the parties are displayed.

The scroll region 423 also extends in the top-to-bottom direction and the scroll bar 425 is placed within the scroll region 423. In this example, a function for adjusting volumes of voices of the three correspondent parties is assigned to one face of the scroll bar 425. Thus, when the user scrolls the scroll bar 425, the controller 180 simultaneously adjusts the voice volumes of the three correspondent parties.

Then, when the user performs a horizontal touch & drag operation on the scroll bar 425, the scroll bar 425 is rotated so that a different face of the scroll bar 425 including a function for adjusting a voice volume of the first correspondent party A is displayed to face the user as shown in (20-2) of FIG. 20. The user can then adjust the voice volume of the first correspondent party A by scrolling the scroll bar 425.

In addition, to clearly indicate that the volume of the first correspondent party A is adjustable, the controller 180 can discriminately display the picture of the first correspondent party A from other correspondent party pictures.

Then, when the user performs another horizontal touch & drag operation on the scroll bar 425, the scroll bar 425 is rotated so that a different face of the scroll bar 425 including a function for adjusting a voice volume of the second correspondent party B is displayed to face the user as shown in (20-3) of FIG. 20. Hence, the user can adjust the voice volume of the second correspondent party B by scrolling the scroll bar 425. The controller 180 can also discriminately display the picture of the second correspondent party B from other correspondent party pictures to clearly indicate that the volume of the second correspondent party B is adjustable.

When the user performs another horizontal touch & drag operation on the scroll bar 425, the scroll bar 425 is rotated so that a different face of the scroll bar 425 including a function for adjusting a voice volume of the third correspondent party C is displayed as shown in (20-4) of FIG. 20. Thus, the user can adjust the voice volume of the third correspondent party C by scrolling the scroll bar 425.

Again, the controller 180 can discriminately display the picture of the third correspondent party C from other correspondent party pictures to clearly indicate that the volume of the third correspondent party C is adjustable.

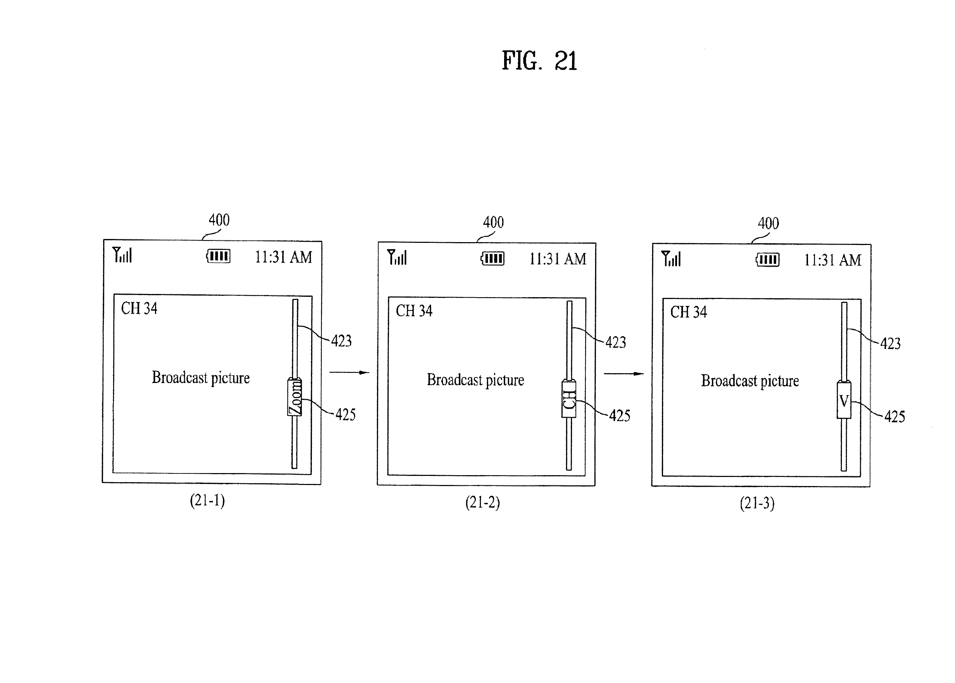

Next, FIG. 21 illustrates functions relevant to a broadcast receiving menu being assigned to the lateral sides of the rotatable scroll bar 425. Referring to (21-1) of FIG. 21, a broadcast reception menu is being executed in the mobile terminal 100.

Further, the controller 180 displays a broadcast picture on the touchscreen 400. The scroll region 423 also extends in the top-to-bottom direction and the scroll bar 425 is placed within the scroll region 423. In addition, in this embodiment, a function for controlling the zoom of the broadcast picture is assigned to one face of the scroll bar 425. Hence, if the scroll bar 425 is scrolled, the broadcast picture is zoomed in or out.

Then, when the user performs a horizontal touch & drag operation on the scroll bar 425, the scroll bar 425 is rotated so that a different face of the scroll bar 425 including a channel switching function is displayed as shown in (21-2) of FIG. 21. Hence, if the scroll bar 425 is scrolled in the scroll bar extending direction, a channel switching operation is performed.

When the user performs another horizontal touch & drag operation on the scroll bar 425, the scroll bar 425 is rotated so that another different face of the scroll bar 425 including a volume adjustment function is displayed as shown in (21-3) of FIG. 21. Hence, if the user scrolls the scroll bar 425, the volume adjustment is performed.

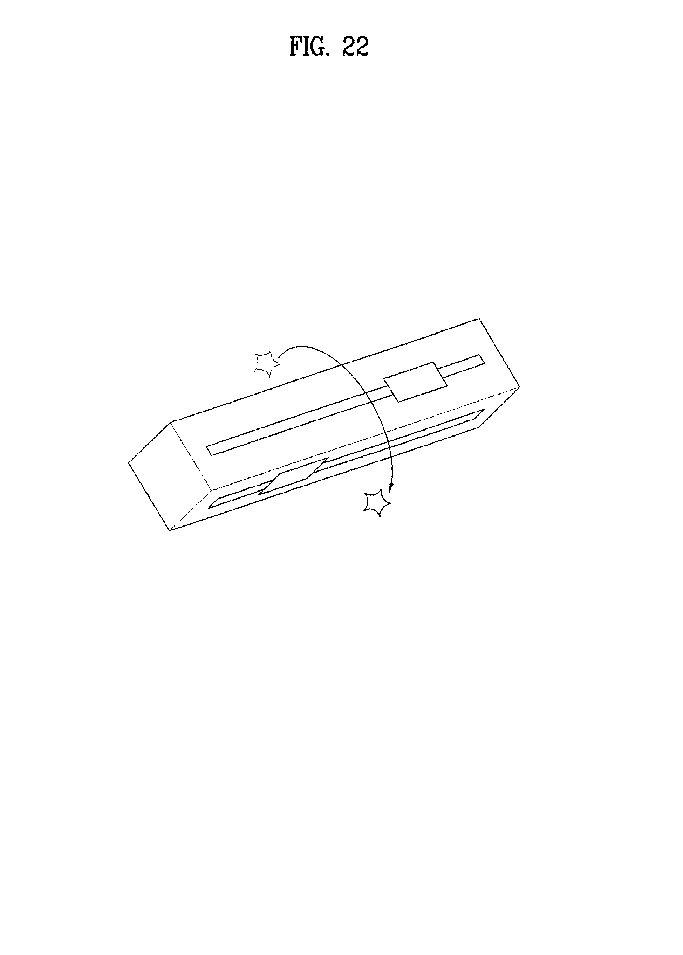

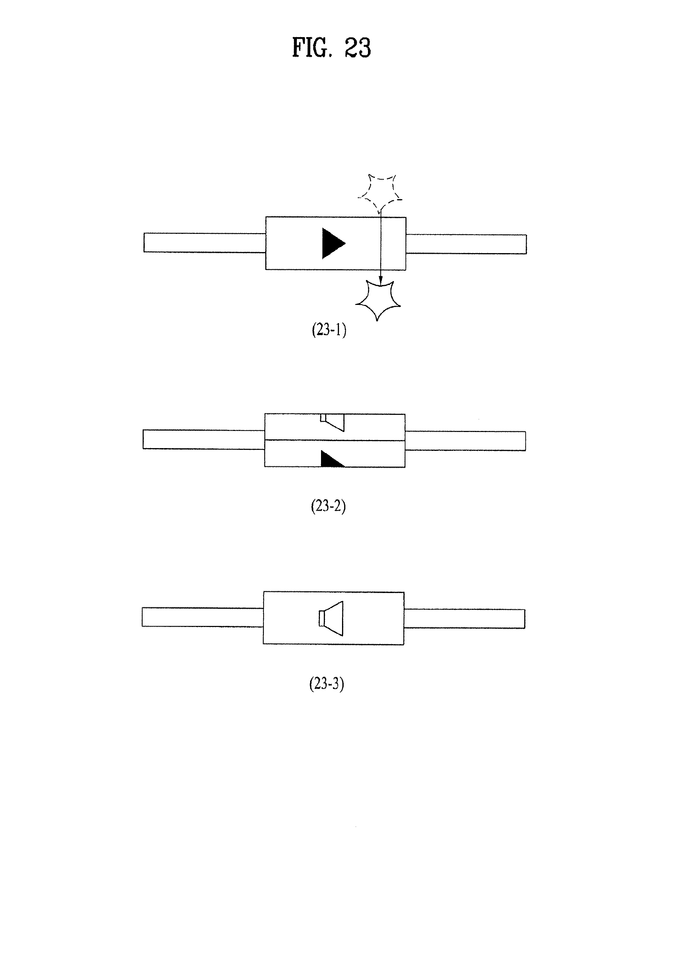

In the above description of the embodiments of the present invention, the scroll bar is configured to have the polygonal shape to be utilized for various functions. However, the scroll bar can have other diverse shapes. This feature is explained in more detail with reference to FIGS. 22 and 23.

As shown in FIG. 22, the scroll region and the scroll bar are configured to be arranged on each face of a prescribed polygonal body to which a different function is assigned. Therefore, the user can select and use a specific function by rotating a specific face of the polygonal body to be aligned in a specific direction by a vertical touch & drag operation and then manipulating the scroll bar.

In addition, when the polygonal body is rotated by the touch & drag operation, the controller 180 can also simultaneously display a pair of scroll bars. Further, any one of the entire functions of the first embodiment described in association with the scroll bar is applicable to the specific function.

Also, the scroll bar does not need to be configured in the polygonal shape. For example, referring to (23-1) to (23-3) of FIG. 23, a predetermined number of functions can be sequentially assigned to the scroll bar each time a touch & drag operation is performed on the scroll bar.

Accordingly, the present invention provides several advantages.

First, by considerably expanding the applications of a scroll bar displayed on a touch screen, it is easier for the terminal user to select a specific function or menu in association with diverse functions and menus provided to a terminal.

In addition, a phone number (i.e., a correspondent party of a phone book), a call record, a message, a thumbnail and the like can be generally named objects differing from each other in type. The use of the scroll bar for the object in one of the above types can be identically applied to the object in a different type. For instance, the control of the number of thumbnail type objects displayed in one area using the scroll bar can be identically applied to the control of the number of different type objects (e.g., phone number object, call record object, message object, etc.) displayed in one area. Moreover, the above-mentioned touch operations may include a contact touch or an approximate touch.

In addition, various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments may also be implemented by controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

According to the above embodiments of the present invention, the above-described methods can be implemented in a program recorded medium as computer-readable codes. The computer-readable media include all kinds of recording devices in which data readable by a computer system are stored. The computer-readable media include ROM, RAM, CD-ROM, magnetic tapes, floppy discs, optical data storage devices, and the like.

The mobile terminal 100 may also be implemented in a variety of different configurations. Examples of such configurations include a folder-type, slide-type, bar-type, rotational-type, swing-type and combinations thereof.

Further, the embodiments of the present invention are applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigators. The present invention is also applicable to cameras, video recorders or other type of terminals.

Further scope of applicability of the present invention will become apparent from the detailed description given hereinafter. However, it should be understood that the detailed description and specific examples, while indicating preferred embodiments of the invention, are given by illustration only.

## Claims

1. A mobile terminal (100) comprising:
a touchscreen (151);
a rotatable multi-function scroll bar on the touchscreen and configured to move in a first direction and to rotate around an axis of the first direction; and
a controller (180) configured to
display the scroll bar on the touch screen,
perform a first function in response to a first touch input on the scroll bar to move the scroll bar in the first direction, **characterized in that** the first function is a scroll function for scrolling a list of orderable items,
receive a second touch input on the scroll bar in order to rotate the scroll bar around the axis of the first direction,
assign a second function different than the first function to the scroll bar when the scroll bar is rotated around the axis of the first direction, wherein the second function is an ordering of items in the list according to a property of the items in the list, and
move the scrollbar in the first direction to scroll the ordered list after the second function is assigned to the scroll bar.

2. The mobile terminal of claim 1, wherein the scroll bar is further configured to rotate around the axis of the first direction in response to the second touch input of touch-dragging the scroll bar in a second direction that is different from the first direction.

3. The mobile terminal of claim 2, wherein the scroll bar has a multi-sided shape in which each side facet of the multi-sided shape scroll bar in parallel with the first direction corresponds to a different function such that the controller assigns each different function as the multi-sided shape scroll bar is rotated to each respective side facet of the multi-sided shape scroll bar.

4. The mobile terminal of claim 3, wherein the multi-sided shape scroll bar is one a polygonal shape, a triangular shape, a rectangular shape, a square shape and a pentagonal shape.

5. The mobile terminal of any one of claims 1 to 4, wherein the controller is further configured to change a function of the scroll bar when the scroll bar is touched in a predetermined manner on the touchscreen.

6. The mobile terminal of any one of claims 1 to 4, wherein the first function is a multimedia contents scrolling function and the second function is a file list view function.

7. The mobile terminal of any one of claims 1 to 4, wherein the first function is a phonebook scrolling function and the second function is one of a phonebook list all function, a phonebook list by group function, and a phonebook list by frequency or time.

8. The mobile terminal of any one of claims 1 to 4, wherein the first function is a message scrolling function and the second function is one of a received or transmitted message list function and a read message function.

9. The mobile terminal of claim 1, wherein the controller is further configured to perform a sub-function of the second function when the scroll bar is touched in a specified manner without being dragged and when the scroll bar is rotated around the axis of the first direction.

10. A method of controlling a mobile terminal, the method comprising:
displaying (S52) a rotatable multi-function scroll bar on a touchscreen in which the scroll bar can be moved a first direction and rotated around an axis of the first direction;
performing (S53) a first function in response to a first touch input on the scroll bar to move the scroll bar in the first direction, **characterized in that** the first function is a scroll function for scrolling a list of orderable items,;
receiving (S53) a second touch input on the scroll bar in order to rotate the scroll bar around the axis of the first direction;
assigning (S53) a second function different than the first function to the scroll bar when the scroll bar is rotated around the axis of the first direction, wherein the second function is an ordering of items in the list according to a property of the items in the list;
moving the scrollbar in the first direction to scroll the ordered list after the second function is assigned to the scroll bar.

11. The method of claim 10, wherein in response to the second touch input of touch-dragging the scroll bar in a second direction that is different from the first direction, the scroll bar rotates around the axis of the first direction.

## Patentansprüche

1. Mobiles Endgerät (100), das aufweist:
einen Berührungsbildschirm (151);
eine drehbare Multifunktions-Blätterleiste auf dem Berührungsbildschirm, die konfiguriert ist, um sich in eine erste Richtung zu bewegen und sich um eine Achse der ersten Richtung zu drehen; und
eine Steuerung (180), die konfiguriert ist, um:
die Blätterleiste auf dem Bildschirm anzuzeigen,
ansprechend auf eine erste Berührungseingabe auf der Blätterleiste eine erste Funktion auszuführen, um die Blätterleiste in der ersten Richtung zu bewegen, **dadurch gekennzeichnet, dass** die erste Funktion eine Blätterfunktion zum Blättern einer Liste sortierbarer Objekte ist,
eine zweite Berührungseingabe auf der Blätterleiste zu empfangen, um die Blätterleiste um die Achse der ersten Richtung zu drehen,
der Blätterleiste eine zweite Funktion, die sich von der ersten Funktion unterscheidet, zuzuweisen, wenn die Blätterleiste um die Achse der ersten Richtung gedreht wird, wobei die zweite Funktion eine Sortierung von Objekten in der Liste gemäß einer Eigenschaft der Objekte in der Liste ist, und
die Blätterleiste in der ersten Richtung zu bewegen, um die sortierte Liste zu blättern, nachdem der Blätterleiste die zweite Funktion zugewiesen wurde.

2. Mobiles Endgerät nach Anspruch 1, wobei die Blätterleiste ferner konfiguriert ist, um sich ansprechend auf die zweite Berührungseingabe des berührenden Ziehens der Blätterleiste in einer zweiten Richtung, die sich von der ersten Richtung unterscheidet, um die Achse der ersten Richtung zu drehen.

3. Mobiles Endgerät nach Anspruch 2, wobei die Blätterleiste eine mehrseitige Form hat, in der jede Seitenfacette der Blätterleiste mit mehrseitiger Form, die parallel zu der ersten Richtung ist, einer anderen Funktion entspricht, so dass die Steuerung jede unterschiedliche Funktion zuweist, während die Blätterleiste mit mehrseitiger Form auf jede jeweilige Seitenfacette der Blätterleiste mit mehrseitiger Form gedreht wird.

4. Mobiles Endgerät nach Anspruch 3, wobei die Blätterleiste mit mehrseitiger Form eine polygonale Form, eine dreieckige Form, eine rechteckige Form, eine quadratische Form oder eine fünfeckige Form ist.

5. Mobiles Endgerät nach einem der Ansprüche 1 bis 4, wobei die Steuerung ferner konfiguriert ist, um eine Funktion der Blätterleiste zu ändern, wenn die Blätterleiste in einer vorgegebenen Weise auf dem Berührungsbildschirm berührt wird.

6. Mobiles Endgerät nach einem der Ansprüche 1 bis 4, wobei die erste Funktion eine Multimediainhalte-Bätterfunktion ist und die zweite Funktion eine Dateilistenansichtsfunktion ist.

7. Mobiles Endgerät nach einem der Ansprüche 1 bis 4, wobei die erste Funktion eine Telefonbuchblätterfunktion ist und die zweite Funktion eine vollständige Telefonbuchlistenlistenfunktion, eine Telefonbuchlistenfunktion nach Gruppen oder eine Telefonbuchlistenfunktion nach Häufigkeit oder Zeit ist.

8. Mobiles Endgerät nach einem der Ansprüche 1 bis 4, wobei die erste Funktion eine Nachrichtenblätterfunktion ist und die zweite Funktion eine Listenfunktion für empfangene Nachrichten oder für gesendete Nachrichten ist.

9. Mobiles Endgerät nach Anspruch 1, wobei die Steuerung ferner konfiguriert ist, um eine Teilfunktion der zweiten Funktion auszuführen, wobei die Blätterleiste in einer spezifizierten Weise berührt wird, ohne gezogen zu werden, wenn die Blätterleiste um die Achse der ersten Richtung gedreht wird.

10. Verfahren zur Steuerung eines mobilen Endgeräts, wobei das Verfahren aufweist:
Anzeigen (S52) einer drehbaren Multifunktions-Blätterleiste auf einem Berührungsbildschirm, auf dem die Blätterleiste in einer ersten Richtung bewegt und um eine Achse der ersten Richtung gedreht werden kann;
Ausführen (S53) einer ersten Funktion ansprechend auf eine erste Berührungseingabe auf der Blätterleiste, um die Blätterleiste in der ersten Richtung zu bewegen, **dadurch gekennzeichnet, dass** die erste Funktion eine Blätterfunktion zum Blättern einer Liste sortierbarer Objekte ist,
Empfangen (S53) einer zweiten Berührungseingabe auf der Blätterleiste, um die Blätterleiste um die Achse der ersten Richtung zu drehen,
Zuweisen (S53) einer zweiten Funktion, die sich von der ersten Funktion unterscheidet, an die Blätterleiste, wenn die Blätterleiste um die Achse der ersten Richtung gedreht wird, wobei die zweite Funktion eine Sortierung von Objekten in der Liste gemäß einer Eigenschaft der Objekte in der Liste ist; und
Bewegen der Blätterleiste in der ersten Richtung, um die sortierte Liste zu blättern, nachdem der Blätterleiste die zweite Funktion zugewiesen wurde.

11. Verfahren nach Anspruch 10, wobei die Blätterleiste sich ansprechend auf die zweite Berührungseingabe des berührenden Ziehens der Blätterleiste in einer zweiten Richtung, die sich von der ersten Richtung unterscheidet, um die Achse der ersten Richtung dreht.

## Revendications

1. Terminal mobile (100) comprenant :
un écran tactile (151) ;
une barre de défilement multifonction rotative sur l'écran tactile et configurée pour se déplacer dans un premier sens et pour tourner autour d'un axe du premier sens ; et
un organe de commande (180) configuré pour :
afficher la barre de défilement sur l'écran tactile,
exécuter une première fonction en réponse à une première entrée tactile sur la barre de défilement pour déplacer la barre de défilement dans le premier sens, **caractérisé en ce que** la première fonction est une fonction de défilement pour faire défiler une liste d'éléments pouvant être ordonnancés,
recevoir une deuxième entrée tactile sur la barre de défilement afin de faire tourner la barre de défilement autour de l'axe du premier sens,
attribuer une deuxième fonction différente de la première fonction à la barre de défilement lorsque la barre de défilement est tournée autour de l'axe du premier sens,
dans lequel la deuxième fonction est un ordonnancement d'éléments dans la liste en fonction d'une propriété des éléments dans la liste, et
déplacer la barre de défilement dans le premier sens pour faire défiler la liste ordonnancée après l'attribution de la deuxième fonction à la barre de défilement.

2. Terminal mobile selon la revendication 1, dans lequel la barre de défilement est en outre configurée pour tourner autour de l'axe du premier sens en réponse à la deuxième entrée tactile de glissement tactile de la barre de défilement dans un deuxième sens qui est différent du premier sens.

3. Terminal mobile selon la revendication 2, dans lequel la barre de défilement a une forme à plusieurs côtés où chaque facette latérale de la barre de défilement de forme à plusieurs côtés parallèlement au premier sens correspond à une fonction différente de sorte que l'organe de commande attribue chaque fonction différente lorsque la barre de défilement de forme à plusieurs côtés est tournée vers chaque facette latérale respective de la barre de défilement de forme à plusieurs côtés.

4. Terminal mobile selon la revendication 3, dans lequel la barre de défilement de forme à plusieurs côtés a l'une d'une forme polygonale, d'une forme triangulaire, d'une forme rectangulaire, d'une forme carrée et d'une forme pentagonale.

5. Terminal mobile selon l'une quelconque des revendications 1 à 4, dans lequel l'organe de commande est en outre configuré pour changer une fonction de la barre de défilement lorsque la barre de défilement est touchée d'une manière prédéterminée sur l'écran tactile.

6. Terminal mobile selon l'une quelconque des revendications 1 à 4, dans lequel la première fonction est une fonction de défilement de contenus multimédias et la deuxième fonction est une fonction de visualisation de liste de fichiers.

7. Terminal mobile selon l'une quelconque des revendications 1 à 4, dans lequel la première fonction est une fonction de défilement d'annuaire téléphonique et la deuxième fonction est l'une d'une fonction consistant à lister l'intégralité d'un annuaire téléphonique, d'une fonction consistant à lister un annuaire téléphonique par groupe et d'une fonction consistant à lister un annuaire téléphonique par fréquence ou par heure.

8. Terminal mobile selon l'une quelconque des revendications 1 à 4, dans lequel la première fonction est une fonction de défilement de message et la deuxième fonction est l'une d'une fonction de liste de messages reçus ou transmis et d'une fonction de messages lus.

9. Terminal mobile selon la revendication 1, dans lequel l'organe de commande est en outre configuré pour exécuter une sous-fonction de la deuxième fonction lorsque la barre de défilement est touchée d'une manière spécifiée sans la faire glisser et lorsque la barre de défilement est tournée autour de l'axe du premier sens.

10. Procédé de commande d'un terminal mobile, le procédé comprenant :
l'affichage (S52) d'une barre de défilement multifonction rotative sur un écran tactile dans lequel la barre de défilement peut être déplacée dans un premier sens et tournée autour d'un axe du premier sens ;
l'exécution (S53) d'une première fonction en réponse à une première entrée tactile sur la barre de défilement pour déplacer la barre de défilement dans le premier sens, **caractérisé en ce que** la première fonction est une fonction de défilement pour faire défiler une liste d'éléments pouvant être ordonnancés ;
la réception (S53) d'une deuxième entrée tactile sur la barre de défilement afin de faire tourner la barre de défilement autour de l'axe du premier sens ;
l'attribution (S53) d'une deuxième fonction différente de la première fonction à la barre de défilement lorsque la barre de défilement est tournée autour de l'axe du premier sens, dans lequel la deuxième fonction est un ordonnancement d'éléments dans la liste en fonction d'une propriété des éléments dans la liste ; et
le déplacement de la barre de défilement dans le premier sens pour faire défiler la liste ordonnancée après l'attribution de la deuxième fonction à la barre de défilement.

11. Procédé selon la revendication 10, dans lequel, en réponse à la deuxième entrée tactile de glissement tactile de la barre de défilement dans un deuxième sens qui est différent du premier sens, la barre de défilement tourne autour de l'axe du premier sens.
